(19) Europäisches Patentamt
European Patent Office
Office européen des brevets

(11) EP 4 431 545 A1

(12) EUROPEAN PATENT APPLICATION
published in accordance with Art. 153(4) EPC

(43) Date of publication:
**18.09.2024 Bulletin 2024/38**

(21) Application number: **22892837.0**

(22) Date of filing: **10.11.2022**

(51) International Patent Classification (IPC):
***C08G 64/04*** *(2006.01)* ***C08G 63/00*** *(2006.01)*
***C08G 64/02*** *(2006.01)* ***G02B 1/04*** *(2006.01)*

(52) Cooperative Patent Classification (CPC):
**C08G 63/00; C08G 64/02; C08G 64/04; G02B 1/04**

(86) International application number:
**PCT/JP2022/041824**

(87) International publication number:
**WO 2023/085339 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021 JP 2021184822**
**09.02.2022 JP 2022018448**

(71) Applicant: **MITSUBISHI GAS CHEMICAL COMPANY, INC.**
**Chiyoda-ku**
**Tokyo 100-8324 (JP)**

(72) Inventors:
- **KATO Noriyuki**
**Tokyo 100-8324 (JP)**
- **NISHIMORI Katsushi**
**Tokyo 125-8601 (JP)**
- **MOTEGI Atsushi**
**Tokyo 125-8601 (JP)**
- **ISHIHARA Kentaro**
**Tokyo 100-8324 (JP)**
- **MURATA SUZUKI Shoko**
**Tokyo 125-8601 (JP)**
- **ARAI Yuta**
**Tokyo 125-8601 (JP)**
- **SATOH Atsuhiro**
**Tokyo 125-8601 (JP)**

(74) Representative: **Hoffmann Eitle**
**Patent- und Rechtsanwälte PartmbB**
**Arabellastraße 30**
**81925 München (DE)**

# (54) THERMOPLASTIC RESIN AND OPTICAL LENS INCLUDING SAME

(57) According to the present invention, there can be provided a thermoplastic resin, comprising 22% to 49% by mole of a constituent unit (A) derived from a diol represented by the following general formula (1A), 40% to 75% by mole of a constituent unit (B) derived from a diol represented by the following general formula (2A), and 0% to 15% by mole of a constituent unit (C) derived from a diol represented by the following general formula (3A), with respect to the total amount (100% by mole) of the constituent units in the resin:

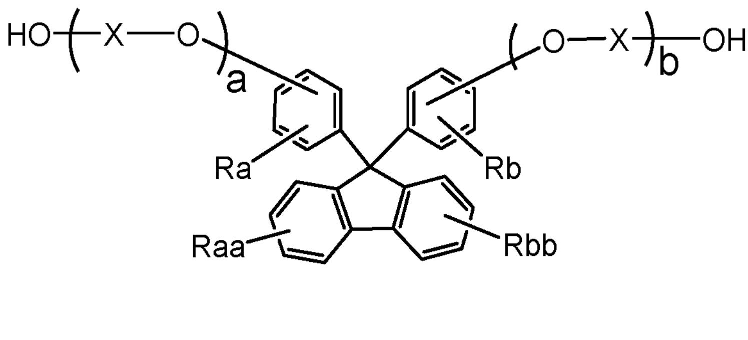

(1A)



Processed by Luminess, 75001 PARIS (FR)

(Cont. next page)

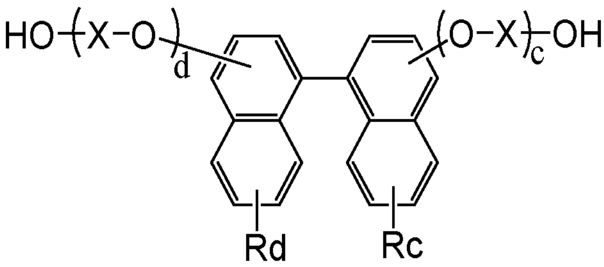

(2A)

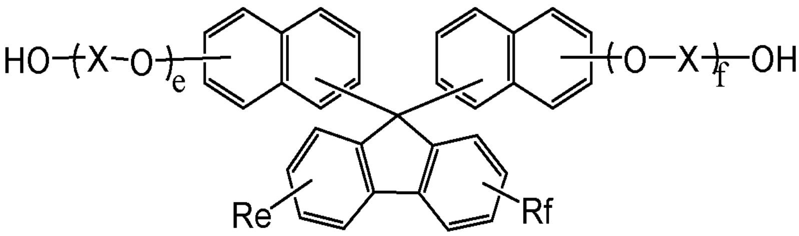

(3A)

## Description

### Technical Field

The present invention relates to a thermoplastic resin and an optical lens comprising the same. More specifically, the present invention relates to a polycarbonate resin and an optical lens comprising the same.

### Background Art

As materials for optical lenses used in the optical systems of various types of cameras such as a camera, a film-integrated camera and a video camera, optical glasses or optical resins have been used. Such optical glasses are excellent in heat resistance, transparency, dimensional stability, chemical resistance and the like. However, the optical glasses are problematic in terms of high material costs, poor formability and low productivity.

On the other hand, an optical lens consisting of an optical resin is advantageous in that it can be produced in a large amount by injection molding, and as materials having a high refractive index for use in camera lenses, polycarbonate, polyester carbonate, polyester resins, etc. have been used.

When such an optical resin is used as an optical lens, the used optical resin is required to have heat resistance, transparency, low water absorbability, chemical resistance, low birefringence, moist-heat resistance, etc., in addition to optical properties such as refractive index and Abbe number. In particular, in recent years, optical lenses having a high refractive index and high heat resistance have been required, and thus, various resins have been developed (Patent Literatures 1 to 5).

Moreover, a thermoplastic resin made from 2,2'-bis(2-hydroxyethoxy)-1,1'-binaphthalene as a raw material has excellent optical properties and is useful as a material for various types of optical applications (Patent Literature 6). However, due to various molding processing and the expansion of usage environments, the improvement of a birefringence in the lens surface has been required.

In recent years, the development of a resin with a high refractive index has been demanded due to the trend toward lighter, thinner, and smaller products. In general, when the refractive index of an optical material is high, a lens element with the same refractive index can be realized on a surface with smaller curvature, thereby enabling a reduction in the amount of aberration generated on this surface. As a result, it becomes possible to reduce the number of lenses, to reduce the eccentricity sensitivity of lenses, and to reduce the thickness of a lens thereby reducing the weight of the lens.

In general, in the optical system of cameras, aberration correction is performed by combining multiple concave lenses and convex lenses. That is to say, the chromatic aberration created by the convex lens is synthetically canceled by combining a concave lens with a chromatic aberration having a sign opposite to that of the convex lens. In this case, the concave lens is required to have high dispersion (i.e., low Abbe number).

Hence, a resin for optical lenses, which has a high refractive index and a low abbe number, has been developed. For example, Patent Literature 7 discloses that a copolymer of a bisphenol A-type polycarbonate constituent unit and a constituent unit represented by the following formula (E) has an improved refractive index. In the Examples of Patent Literature 7, it is described that a refractive index of 1.62 to 1.64 and an Abbe number of 23 to 26 were achieved. This improvement in the refractive index is considered to be because of the constituent unit represented by the formula (E).

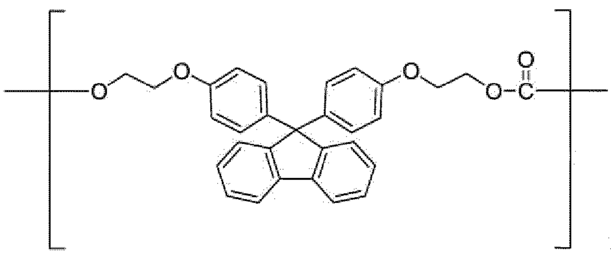

(E)

Moreover, a copolymer of a polycarbonate resin comprising a constituent unit having a fluorene structure and bisphenol A is disclosed in Patent Literature 8. In the Examples of this literature, it is described that a refractive index of 1.616 to 1.636 was achieved. It is to be noted that the constituent unit disclosed in this literature is different from the formula (E).

As described above, a polycarbonate resin and an optical lens, which have a high refractive index and a low Abbe number, have not yet been provided.

Furthermore, recently, it has been desired to develop a polycarbonate resin and an optical lens, which have a small absolute value of birefringence intensity and also have a small birefringence in the lens surface.

Citation List

Patent Literature

Patent Literature 1: JP Patent Publication (Kokai) No. 2018-2893 A
Patent Literature 2: JP Patent Publication (Kokai) No. 2018-2894 A
Patent Literature 3: JP Patent Publication (Kokai) No. 2018-2895 A
Patent Literature 4: JP Patent Publication (Kokai) No. 2018-59074 A
Patent Literature 5: International Publication WO2017/078073
Patent Literature 6: International Publication WO2014/073496
Patent Literature 7: International Publication WO2007/142149
Patent Literature 8: JP Patent Publication (Kokai) No. 6-25398 A (1994)

Summary of Invention

Technical Problem

It is an object of the present invention to provide a thermoplastic resin that is excellent in optical properties such as refractive index, Abbe number and haze, and is also excellent in birefringence in the lens surface, and an optical lens using the same. Further, it is another object of the present invention to provide a polycarbonate resin having a high refractive index and a low Abbe number, and also having a small absolute value of birefringence intensity and a small birefringence in the lens surface, and an optical lens using the same.

Solution to Problem

As a result of intensive studies directed towards solving the conventional problem, the present inventors have found that a thermoplastic resin that is excellent in optical properties such as refractive index, Abbe number and haze, and is also excellent in birefringence in the lens surface, can be obtained by mixing a specific amount of a diol compound having a specific structure into the raw materials of the resin, thereby completing the present invention. Further, the present inventors have also found that the aforementioned object can be achieved by the below-mentioned polycarbonate resin and optical lens, thereby reaching the present invention.

Specifically, the present invention includes the following aspects.

< 1 > A thermoplastic resin, comprising 22% to 49% by mole of a constituent unit (A) derived from a diol represented by the following general formula (1A), 40% to 75% by mole of a constituent unit (B) derived from a diol represented by the following general formula (2A), and 0% to 15% by mole of a constituent unit (C) derived from a diol represented by the following general formula (3A), with respect to the total amount (100% by mole) of the constituent units in the resin:

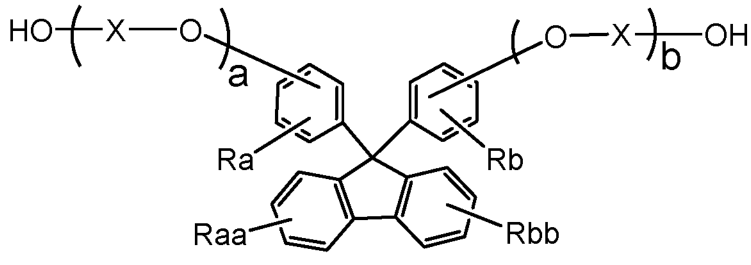

(1A)

wherein

$R_a$, $R_b$, $R_{aa}$ and $R_{bb}$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 20 carbon atoms and optionally having a substituent, a

heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and -C≡C-$R_h$, wherein
$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,
X each independently represents an alkylene group containing 1 to 5 carbon atoms and optionally having a substituent, and
a and b each independently represent an integer of 0 to 10,

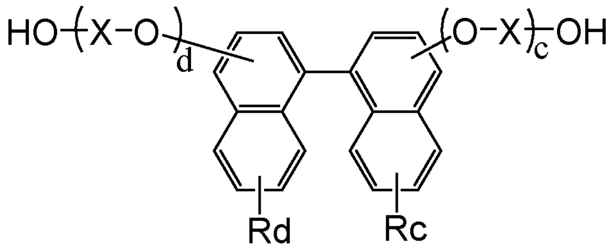

(2A)

wherein

$R_c$ and $R_d$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 30 carbon atoms and optionally having a substituent, a heteroaryl group containing 6 to 30 carbon atoms and optionally having a substituent, which comprises one or more heterocyclic atoms selected from O, N and S, an aryloxy group containing 6 to 20 carbon atoms and optionally having a substituent, and -C≡C-$R_h$, wherein
$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,
X each independently represents an alkylene group containing 1 to 5 carbon atoms and optionally having a substituent, and
c and d each independently represent an integer of 0 to 10, and

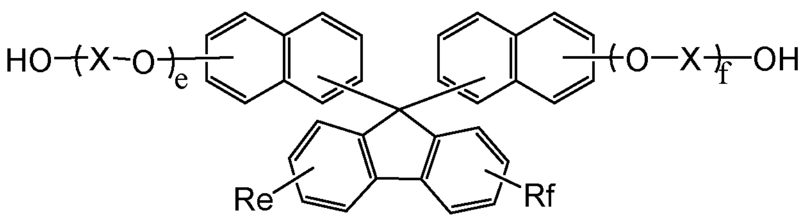

(3A)

wherein

$R_e$ and $R_f$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and -C≡C-$R_h$, wherein
$R_h$ represents an aryl group containing 6 to 20 carbon atoms and optionally having a substituent, or a heteroaryl group containing 6 to 20 carbon atoms and optionally having a substituent, which comprises

one or more heterocyclic atoms selected from O, N and S,
X each independently represents an alkylene group containing 1 to 5 carbon atoms and optionally having a substituent, and
e and f each independently represent an integer of 0 to 10.

< 2 > The thermoplastic resin according to the above < 1 >, wherein the ratio of the constituent unit (A) derived from the diol represented by the general formula (1A) is 24% to 47% by mole, the ratio of the constituent unit (B) derived from the diol represented by the general formula (2A) is 45% to 70% by mole, and the ratio of the constituent unit (C) derived from the diol represented by the general formula (3A) is 0% to 8% by mole, with respect to the total amount (100% by mole) of the constituent units in the resin.
< 3 > The thermoplastic resin according to the above < 1 > or < 2 >, wherein the diol represented by the general formula (1A) includes a diol represented by the following structural formula:

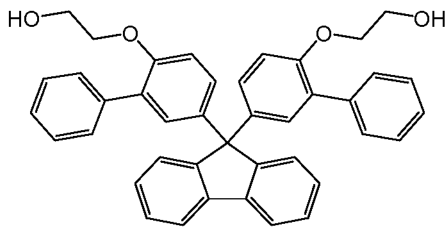

(OPPFL)

< 4 > The thermoplastic resin according to any one of the above < 1 > to < 3 >, wherein the diol represented by the general formula (2A) includes at least one of diols represented by the following structural formulae:

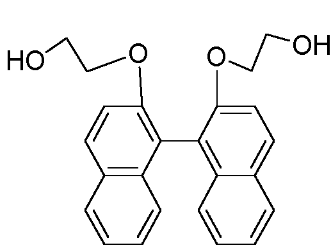

(BNE)

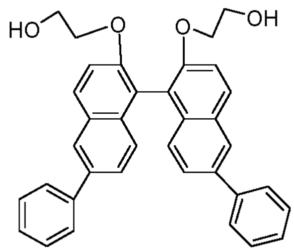

(DPBHBNA)

< 5 > The thermoplastic resin according to any one of the above < 1 > to < 4 >, wherein the diol represented by the general formula (3A) includes a diol represented by the following structural formula:

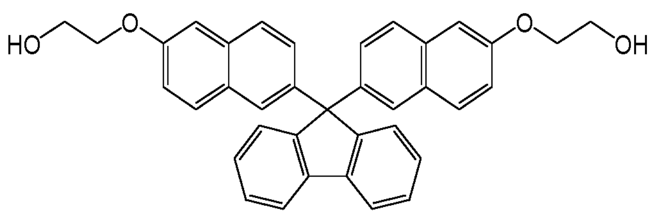

(NOLE)

< 6 > The thermoplastic resin according to any one of the above < 1 > to < 5 >, which is a polycarbonate resin.
< 7 > The thermoplastic resin according to any one of the above < 1 > to < 6 >, which further comprises a constituent unit derived from at least one monomer selected from the following monomer group:

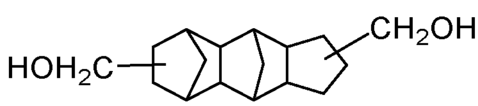

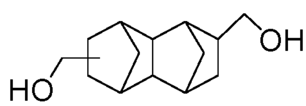

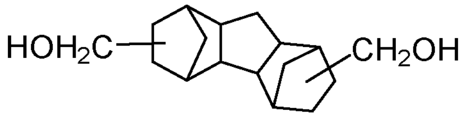
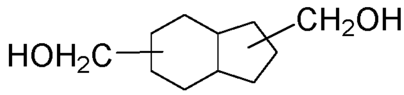

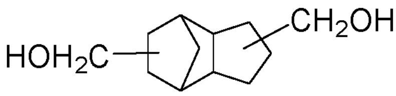
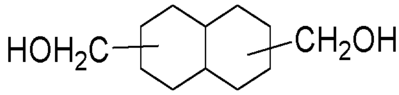

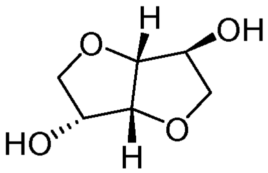
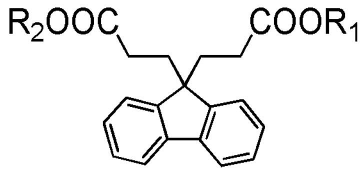

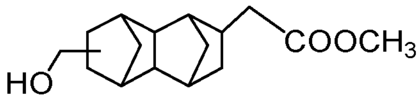
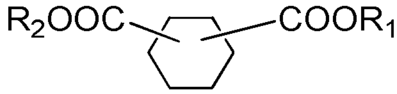

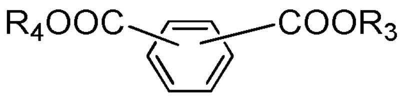
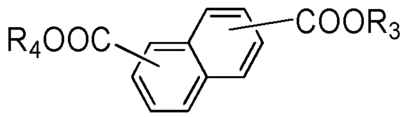

wherein $R_1$ and $R_2$ each independently represent a hydrogen atom, a methyl group or an ethyl group, and $R_3$ and $R_4$ each independently represent a hydrogen atom, a methyl group, an ethyl group or alkylene glycol containing 2 to 5 carbon atoms.

< 8 > The thermoplastic resin according to any one of the above < 1 > to < 7 >, which has a birefringence in the lens surface of 1 to 21.

< 9 > The thermoplastic resin according to any one of the above < 1 > to < 8 >, which has a polystyrene-converted weight average molecular weight (Mw) of 10,000 to 100,000.

< 10 > The thermoplastic resin according to any one of the above < 1 > to < 9 >, which has a refractive index (nD) of 1.650 to 1.695.

< 11 > The thermoplastic resin according to any one of the above < 1 > to < 10 >, which has an Abbe number (v) of 16.0 to 21.0.

< 12 > The thermoplastic resin according to any one of the above < 1 > to < 11 >, which has a glass transition temperature of 130°C to 190°C.

< 13 > The thermoplastic resin according to any one of the above < 1 > to < 12 >, which has a melt volume-flow rate (MVR) of 20 to 55.

< 14 > The thermoplastic resin according to any one of the above < 1 > to < 13 >, which has a haze of 0.01 to 1.00.

< 15 > An optical member, comprising the thermoplastic resin according to any one of the above < 1 > to < 14 >.

< 16 > An optical lens, comprising the thermoplastic resin according to any one of the above < 1 > to < 14 >.

< 17 > An optical film, comprising the thermoplastic resin according to any one of the above < 1 > to < 14 >.

< 18 > A polycarbonate resin, comprising a constituent unit represented by the following general formula (1B), a constituent unit represented by the following general formula (2B), and a constituent unit represented by the following general formula (3B), wherein

the ratio of the constituent unit represented by the following general formula (1B) is 1% by mole or more and less than 10% by mole,

the ratio of the constituent unit represented by the following general formula (2B) is 10% to 60% by mole, and the ratio of the constituent unit represented by the following general formula (3B) is 5% to 80% by mole:

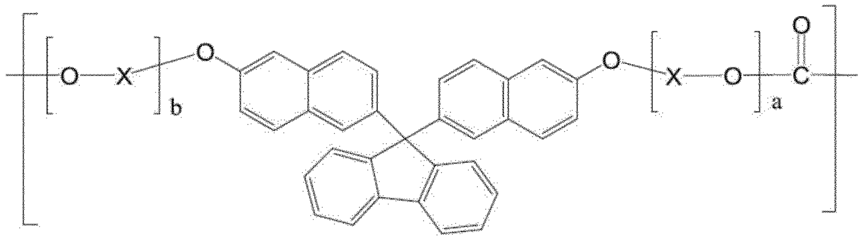

(1B)

wherein X represents an alkylene group containing 1 to 4 carbon atoms, and a and b each independently represent an integer of 1 to 10,

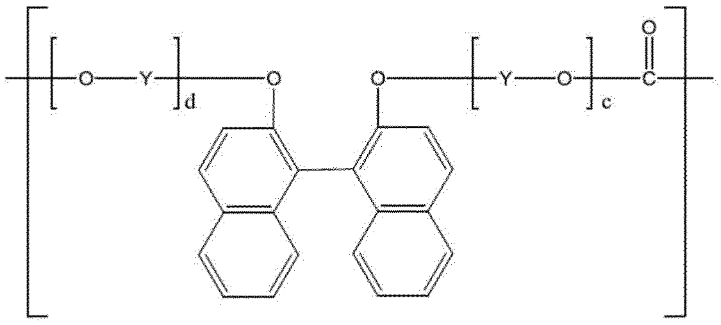

(2B)

wherein Y represents an alkylene group containing 1 to 4 carbon atoms, and c and d each independently represent an integer of 1 to 10, and

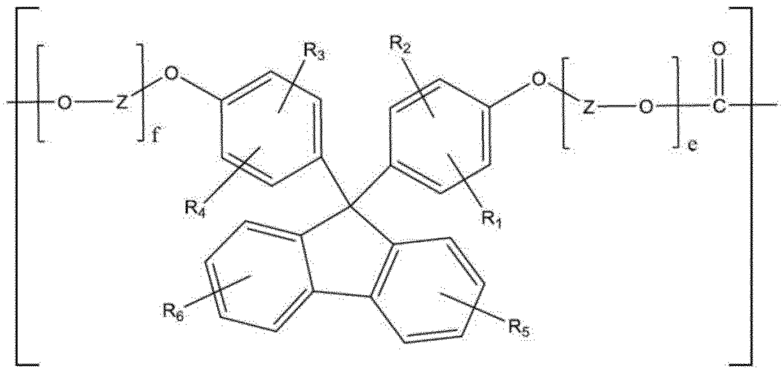

(3B)

wherein

Z represents an alkylene group containing 1 to 4 carbon atoms,
$R_1$ to $R_6$ each independently represent a hydrogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and
e and f each independently represent an integer of 0 to 5.

< 19 > The polycarbonate resin according to the above < 18 >, wherein

the ratio of the constituent unit represented by the general formula (1B) is 2% to 9% by mole,
the ratio of the constituent unit represented by the general formula (2B) is 20% to 60% by mole, and
the ratio of the constituent unit represented by the general formula (3B) is 30% to 70% by mole.

< 20 > An optical lens, comprising the polycarbonate resin according to the above < 18 > or < 19 >.

Advantageous Effects of Invention

According to the present invention, there can be provided: a thermoplastic resin that is excellent in optical properties such as refractive index, Abbe number and haze, and is also excellent in birefringence in the lens surface; and an optical lens comprising the same. Furthermore, according to the present invention, there can be provided: a polycarbonate resin having a high refractive index and a low Abbe number, and also having a small absolute value of birefringence intensity and a small birefringence in the lens surface; and an optical lens comprising the same.

Description of Embodiments

Hereinafter, the present invention will be described in detail by exemplifying synthetic examples, examples, and the like, but the present invention is not limited to the exemplified synthetic examples, examples, and the like. The methods described below can be changed to any methods within a range that does not greatly deviate from the contents of the present invention.

[First Embodiment]

< Thermoplastic resin >

A first embodiment of the present invention relates to a thermoplastic resin, comprising 22% to 49% by mole of a constituent unit (A) derived from a diol represented by the following general formula (1A), 40% to 75% by mole of a constituent unit (B) derived from a diol represented by the following general formula (2A), and 0% to 15% by mole of a constituent unit (C) derived from a diol represented by the following general formula (3A), with respect to the total amount (100% by mole) of the constituent units in the resin.

[Constituent unit (A) derived from diol represented by general formula (1A)]

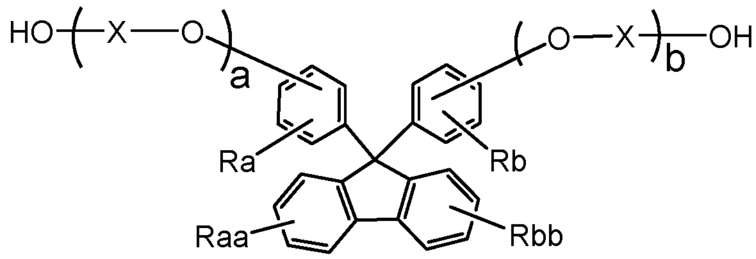

(1A)

In the above general formula (1A), $R_a$, $R_b$, $R_{aa}$ and $R_{bb}$ are each independently selected from the group consisting of a hydrogen atom, a halogen atom (a fluorine atom, a chlorine atom, a bromine atom, or an iodine atom), an alkyl group containing 1 to 20 carbon atoms and optionally having a substituent (preferably, an alkyl group containing 1 to 6 carbon atoms), an alkoxy group containing 1 to 20 carbon atoms and optionally having a substituent (preferably, an alkoxy group containing 1 to 6 carbon atoms), a cycloalkyl group containing 5 to 20 carbon atoms and optionally having a substituent (preferably, a cycloalkyl group containing 5 to 10 carbon atoms), a cycloalkoxy group containing 5 to 20 carbon atoms and optionally having a substituent (preferably, a cycloalkoxy group containing 5 to 10 carbon atoms), an aryl group containing 6 to 20 carbon atoms and optionally having a substituent (preferably, an aryl group containing 6 to 12 carbon atoms), a heteroaryl group containing 6 to 20 carbon atoms and optionally having a substituent, which comprises one or more heterocyclic atoms selected from O, N and S (preferably, a heteroaryl group containing 6 to 12 carbon atoms), an aryloxy group containing 6 to 20 carbon atoms and optionally having a substituent (preferably, an aryloxy group containing 6 to 12 carbon atoms), and $-C{\equiv}C-R_h$.

Preferably, $R_a$ and $R_b$ each independently represent a hydrogen atom, a methyl group, an ethyl group, or a phenyl group, and $R_{aa}$ and $R_{bb}$ each independently represent a hydrogen atom or a phenyl group.

$R_h$ in the above $-C{\equiv}C-R_h$ represents an aryl group containing 6 to 20 carbon atoms and optionally having a substituent (preferably, an aryl group containing 6 to 12 carbon atoms), or a heteroaryl group containing 6 to 20 carbon atoms and optionally having a substituent, which comprises one or more heterocyclic atoms selected from O, N and S

(preferably, a heteroaryl group containing 6 to 12 carbon atoms).

X each independently represents an alkylene group containing 1 to 5 carbon atoms and optionally having a substituent (preferably, an alkylene group containing 1 to 3 carbon atoms, and more preferably, an ethylene group).

a and b each independently represent an integer of 0 to 10, preferably an integer of 1 to 3, and more preferably 1.

Besides, in the present description, examples of the substituent in the phrase "optionally having a substituent" may include halogen a cyano group, an alkyl group containing 1 to 20 carbon atoms, and an aryl group containing 6 to 12 carbon atoms.

In one embodiment of the present invention, the constituent unit (A) derived from the diol represented by the general formula (1A) is preferably

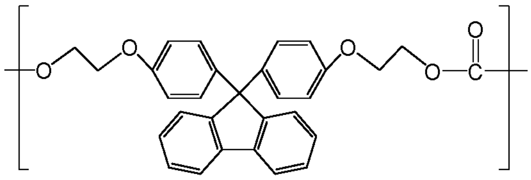

or

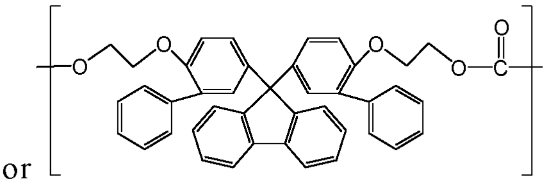

because the balance between the refractive index and the Abbe number is favorable when the thermoplastic resin is used as an optical lens.

The above-described constituent units are derived from BPEF (9,9-bis[4-(2-hydroxyethoxy)phenyl]fluorene) represented by the following structural formula and OPPFL (9,9-bis[4-(2-hydroxyethoxy)-3-phenylphenyl]fluorene) represented by the following structural formula, respectively. In the present invention, either a commercially available product or a synthesized product may be used.

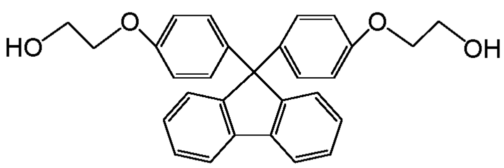

BPEF

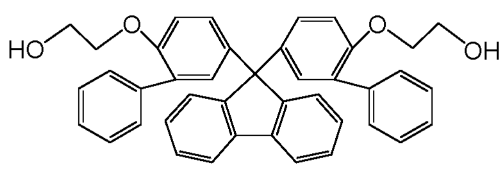

OPPFL

[Constituent unit (B) derived from diol represented by general formula (2A)]

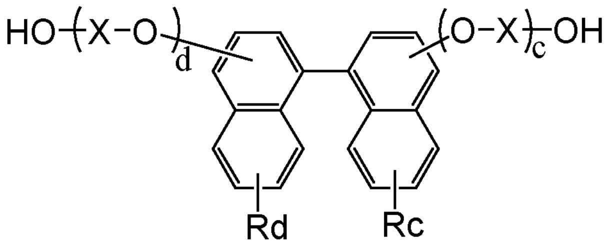

(2A)

In the above general formula (2A), $R_c$ and $R_d$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 30 carbon atoms and optionally having a substituent, a heteroaryl group containing 6 to 30 carbon atoms and optionally having a substituent, which comprises one or more heterocyclic atoms selected from O, N and S, an aryloxy group containing 6 to 20 carbon atoms and optionally having a substituent, and $-C{\equiv}C-R_h$, wherein

$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X each independently represents an alkylene group containing 1 to 5 carbon atoms and optionally having a

substituent, and

c and d each independently represent an integer of 0 to 10.

In the above general formula (2A), $R_c$ and $R_d$ each independently represent, preferably a hydrogen atom, an alkyl group containing 1 to 4 carbon atoms, an alkoxy group containing 1 to 4 carbon atoms, or an aryl group containing 6 to 30 carbon atoms, more preferably an aryl group containing 6 to 20 carbon atoms, and more preferably an aryl group containing 6 to 14 carbon atoms. In addition, at least one of $R_c$ and $R_d$ in the general formula (2A) is preferably an aryl group containing 6 to 20 carbon atoms, and more preferably an aryl group containing 6 to 14 carbon atoms. In particular, the two of $R_c$ and $R_d$ are further preferably an aryl group containing 6 to 14 carbon atoms, or an aryl group containing 6 to 12 carbon atoms.

$R_c$ and $R_d$ may be the same or different, and may be selected from a monocyclic or polycyclic aryl group containing 6 to 30 carbon atoms, or a monocyclic or polycyclic heteroaryl group containing 5 to 36 ring atoms, wherein 1, 2, 3 or 4 ring atoms are selected from nitrogen, sulfur and oxygen, and other ring atoms are carbons. Herein, the monocyclic or polycyclic aryl group and the monocyclic or polycyclic heteroaryl group may be or may not be substituted.

$R_c$ and $R_d$ may each be selected from the following group. That is, it is a group consisting of:

azulenyl,
indenyl, which may not be substituted, or may be optionally substituted with 2, 3, 4 or 5 substituents selected from the group consisting of phenyl, and a polycyclic aryl group having 2, 3, or 4 phenyl rings, which may bind to each other by a single bond, may be directly condensed with each other, and/or may be condensed into a saturated or unsaturated 4- to 10-membered monocyclic or bicyclic hydrocarbon ring,
unsubstituted phenyl,
phenyl substituted with 1 or 2 CN groups,
phenyl substituted with 2, 3, 4 or 5 substituents selected from phenyl, and a polycyclic aryl group having 2, 3, or 4 phenyl rings, which may bind to each other by a single bond, may be directly condensed with each other, and/or may be condensed into a saturated or unsaturated 4- to 10-membered monocyclic or bicyclic hydrocarbon ring, and
polycyclic aryl having 2, 3, or 4 phenyl rings, which may be directly condensed with each other, and/or may be condensed into a saturated or unsaturated 4- to 10-membered monocyclic or bicyclic hydrocarbon ring, wherein the polycyclic aryl may not be substituted, or may be substituted with 1 or 2 substituents selected from phenyl, and polycyclic aryl having 2 or 3 phenyl rings, wherein the 2 or 3 phenyl rings may bind to each other by a single bond, may be directly condensed with each other, and/or may be condensed into a saturated or unsaturated 4- to 10-membered monocyclic or bicyclic hydrocarbon ring, and the phenyl ring in the polycyclic aryl is not substituted or has 1 or 2 substituents $R^a$.

Moreover, $R_c$ and $R_d$ may each be selected from the following group. That is, $R_c$ and $R_d$ are each preferably selected from the group consisting of:

phenyl, which may not be substituted, or may be substituted with 1, 2, 3, 4 or 5 phenyl groups,
phenyl substituted with 1 or 2 CN groups,
phenyl, which is substituted with 1 or 2 polycyclic aryl groups selected from biphenyl, naphthyl, fluorenyl, anthracenyl, phenanthryl and pyrenyl, and which is further substituted with one phenyl group,
naphthyl, which is not substituted, or which is substituted with 1 or 2 substituents selected from CN, phenyl, and polycyclic aryl selected from biphenyl, naphthyl, fluorenyl, anthracenyl, phenanthryl and pyrenyl,
biphenylenyl,
triphenylenyl,
tetraphenylenyl,
phenanthryl,
pyrenyl,
9H-fluorenyl,
dibenzo[a,e][8]annulenyl,
perirenyl, and
9,9'-spirobi[9H-fluoren]yl.

Herein, $R_c$ and $R_d$ are preferably selected from the group consisting of phenyl, 2-cyanophenyl, 3-cyanophenyl, 4-cyanophenyl, 2-naphthyl, 1-naphthyl, and 9-naphthyl.

Furthermore, $R_c$ and $R_d$ may each be selected from the following group. That is, it is a group consisting of:

a heteroaromatic monocyclic group having 5 or 6 ring atoms, wherein the heteroaromatic monocyclic group has 1, 2, 3 or 4 nitrogen atoms, or 1 oxygen atom and 0, 1, 2 or 3 nitrogen atoms, or 1 sulfur atom and 0, 1, 2 or 3 nitrogen

atoms, and other ring atoms are carbon atoms,

a heteroaromatic polycyclic group having the above-described heteroaromatic monocyclic ring and further, 1, 2, 3, 4 or 5 aromatic rings selected from phenyl and a heteroaromatic monocyclic ring, wherein the (hetero)aromatic rings of the polycyclic heteroaryl may bind to each other by a covalent bond, may be directly condensed with each other, and/or may be condensed into a saturated or unsaturated 4- to 10-membered monocyclic or bicyclic hydrocarbon ring, and

a heteroaromatic polycyclic group, which has at least one saturated or partially unsaturated 5- or 6-membered heteroring, having, as ring atoms, 1 or 2 heteroatoms selected from oxygen, sulfur and nitrogen, and further, 1, 2, 3, 4 or 5 aromatic rings selected from phenyl and the above-described heteroaromatic monocyclic ring, wherein at least one of the above-described further aromatic rings may be directly condensed with a saturated or partially unsaturated 5- or 6-membered heterocyclic group, and other further aromatic rings of the polycyclic heteroaryl aromatic ring may bind to one another by a covalent bond, may be directly condensed with one another, and/or may be condensed into a saturated or unsaturated 4- to 10-membered monocyclic or bicyclic hydrocarbon ring.

Further, $R_c$ and $R_d$ may each be selected from the following group. That is, it is a group consisting of furyl, thienyl, pyrrolyl, imidazolyl, pyrazolyl, 1,2,3-triazolyl, 1,2,4-triazolyl, tetrazolyl, oxazolyl, isooxazolyl, 1,3,4-oxadiazolyl, 1,2,4-oxadiazolyl, pyridinyl, pyrazinyl, pyridazinyl, pyrimidinyl, triazinyl, benzofuryl, dibenzofuranyl, benzothienyl, dibenzothienyl, thiantrenyl, naphthofuryl, furo[3,2-b]furanyl, furo[2,3-b]furanyl, furo[3,4-b]furanyl, oxanthrenyl, indolyl, isoindolyl, carbazolyl, indolizinyl, benzopyrazolyl, benzimidazolyl, benzoxazolyl, benzo[cd]indolyl, 1H-benzo[g]indolyl, quinolinyl, isoquinolinyl, acridinyl, phenazinyl, quinazolinyl, quinoxalinyl, phenoxazinyl, benzo[b][1,5]naphthylidinyl, cinnolinyl, 1,5-naphthyridinyl, 1,8-naphthyridinyl, phenylpyrrolyl, naphthylpyrrolyl, dipyridinyl, phenylpyridinyl, naphthylpyridinyl, pyrido[4,3-b]indolyl, pyrido[3,2-b]indolyl, pyrido[3,2-g]quinolinyl, pyrido[2,3-b][1,8]naphthyridinyl, pyrrolo[3,2-b]pyridinyl, pteridinyl, purinyl, 9H-xanthenyl, 2H-chromenyl, phenanthridinyl, phenanthrolinyl, furo[3,2-f][1]benzofuranyl, furo[2,3-f][1]benzofuranyl, furo[3,2-g]quinolinyl, furo[2,3-g]quinolinyl, furo[2,3-g]quinoxalinyl, benzo[g]chromenyl, pyrrolo[3,2,1-hi]indolyl, benzo[g]quinoxalinyl, benzo[f]quinoxalinyl, and benzo[h]isoquinolinyl.

X in the above general formula (2A) each independently represents, preferably an alkylene group containing 2 to 4 carbon atoms, more preferably an alkylene group containing 2 or 3 carbon atoms, and particularly preferably an ethylene group.

Moreover, c and d in the above general formula (2A) each independently represent, preferably an integer of 1 to 6, more preferably an integer of 1 to 4, and particularly preferably 2 or 3.

The diol represented by the above general formula (2A) preferably includes at least one of diols represented by the following structural formulae.

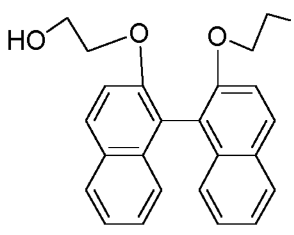 (BNE) 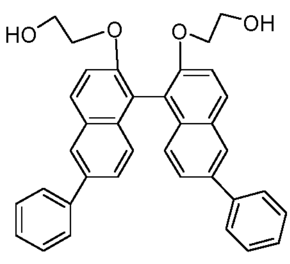 (DPBHBNA)

[Constituent unit (C) derived from diol represented by general formula (3A)]

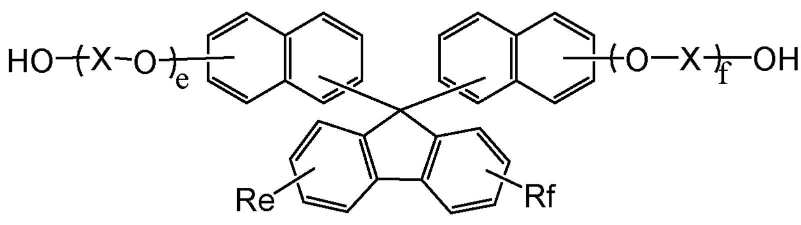

(3)

In the general formula (3A), $R_e$ and $R_f$ are each independently selected from the group consisting of a hydrogen atom, a halogen atom (a fluorine atom, a chlorine atom, a bromine atom, or an iodine atom), an alkyl group containing

1 to 20 carbon atoms and optionally having a substituent (preferably, an alkyl group containing 1 to 6 carbon atoms), an alkoxy group containing 1 to 20 carbon atoms and optionally having a substituent (preferably, an alkoxy group containing 1 to 6 carbon atoms), a cycloalkyl group containing 5 to 20 carbon atoms and optionally having a substituent (preferably, a cycloalkyl group containing 5 to 10 carbon atoms), a cycloalkoxy group containing 5 to 20 carbon atoms and optionally having a substituent (preferably, a cycloalkoxy group containing 5 to 10 carbon atoms), an aryl group containing 6 to 20 carbon atoms and optionally having a substituent (preferably, an aryl group containing 6 to 12 carbon atoms), a heteroaryl group containing 6 to 20 carbon atoms and optionally having a substituent, which comprises one or more heterocyclic atoms selected from O, N and S (preferably, a heteroaryl group containing 6 to 12 carbon atoms), an aryloxy group containing 6 to 20 carbon atoms and optionally having a substituent (preferably, an aryloxy group containing 6 to 12 carbon atoms), and $-C{\equiv}C-R_h$.

Preferably, $R_e$ and $R_f$ each independently represent a hydrogen atom or a phenyl group.

$R_h$ in the above $-C{\equiv}C-R_h$ represents an aryl group containing 6 to 20 carbon atoms and optionally having a substituent (preferably, an aryl group containing 6 to 12 carbon atoms), or a heteroaryl group containing 6 to 20 carbon atoms and optionally having a substituent, which comprises one or more heterocyclic atoms selected from O, N and S (preferably, a heteroaryl group containing 6 to 12 carbon atoms).

X each independently represents an alkylene group containing 1 to 5 carbon atoms and optionally having a substituent (preferably, an alkylene group containing 1 to 3 carbon atoms, and more preferably, an ethylene group).

e and f each independently represent an integer of 0 to 10, preferably an integer of 1 to 3, and more preferably 1.

In one embodiment of the present invention, the diol represented by the above general formula (3A) is particularly preferably NOLE (9,9-bis[6-(2-hydroxyethoxy)-2-naphthyl]fluorene) represented by the following structural formula. In the present invention, either a commercially available product or a synthesized product may be used.

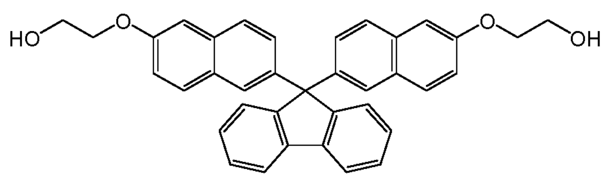

NOLE

One embodiment of the present invention relates to a thermoplastic resin, comprising 22% to 49% by mole (preferably 24% to 47% by mole, more preferably 26% to 45% by mole) of the constituent unit (A) derived from the diol represented by the above general formula (1A), 40% to 75% by mole (preferably 45% to 70% by mole, more preferably 40% to 65% by mole) of the constituent unit (B) derived from the diol represented by the above general formula (2A), and 0% to 15% by mole (preferably 0% to 8% by mole, more preferably 0% to 6% by mole) of the constituent unit (C) derived from the diol represented by the above general formula (3A), with respect to the total amount (100% by mole) of the constituent units in the resin.

The thermoplastic resin of one embodiment of the present invention is not particularly limited, and examples thereof may include a polyester resin, a polycarbonate resin, a polyester carbonate resin, an epoxy resin, a polyurethane resin, a polyacrylic acid ester resin, and a polymethacrylic acid ester resin. The thermoplastic resin of one embodiment of the present invention is preferably a polycarbonate resin, a polyester resin or a polyester carbonate resin, and is more preferably a polycarbonate resin.

In the thermoplastic resin of one embodiment of the present invention, the total ratio of the constituent units (A), (B) and (C) in all of the constituent units is preferably 80% to 100% by mole, more preferably 90% to 100% by mole, and particularly preferably 100% by mole in all of the constituent units.

That is to say, the thermoplastic resin of one embodiment of the present invention may comprise the constituent units derived from aliphatic dihydroxy compounds and the constituent units derived from aromatic dihydroxy compounds, which are generally used as constituent units of polycarbonate resins and polyester carbonate resins, as well as the constituent units (A) to (C), within a range in which the effects of the present invention are not impaired.

Specifically, various compounds are exemplified as such aliphatic dihydroxy compounds. Particular examples thereof may include 1,4-cyclohexane dimethanol, tricyclodecane dimethanol, 1,3-adamantane dimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

Various compounds are exemplified as such aromatic dihydroxy compounds. Particular examples thereof may include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide,

bis(4-hydroxyphenyl)ketone, and bisphenoxyethanolfluorene.

Further, the thermoplastic resin of one embodiment of the present invention preferably comprises a constituent unit derived from at least one monomer selected from the following monomer group.

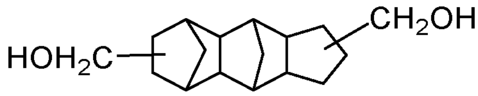

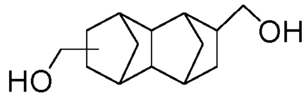

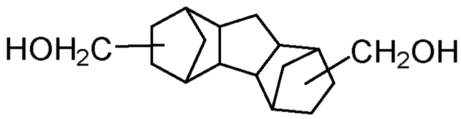

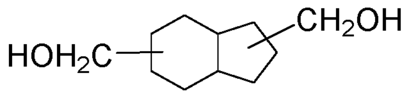

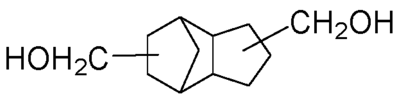

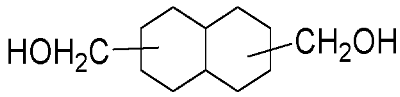

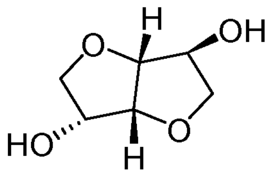

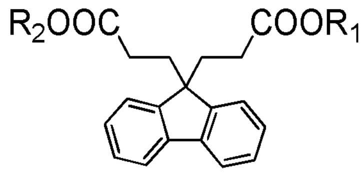

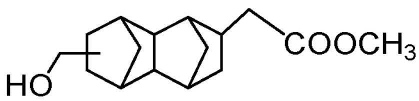

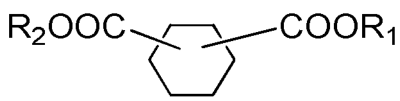

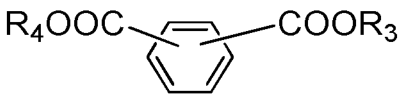

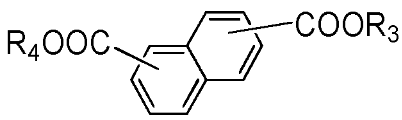

In the above formulae, $R_1$ and $R_2$ each independently represent a hydrogen atom, a methyl group or an ethyl group; and $R_3$ and $R_4$ each independently represent a hydrogen atom, a methyl group, an ethyl group or alkylene glycol containing 2 to 5 carbon atoms.

The polycarbonate resin of one preferred embodiment of the present invention may comprise, as impurities, an alcoholic compound that may be generated as a by-product upon the production thereof, such as a phenolic compound, or a diol component or a carbonic acid diester that has not reacted and remains, in some cases.

Such an alcoholic compound such as a phenolic compound, and such a carbonic acid diester, which are comprised as impurities, may cause a reduction in the strength of the resulting molded body or generation of odors. Accordingly, the smaller the contents of these compounds, the better.

The content of the remaining phenolic compound is preferably 3000 ppm by mass or less, more preferably 1000 ppm by mass or less, particularly preferably 300 ppm by mass or less, with respect to 100% by mass of the polycarbonate resin.

The content of the remaining diol component is preferably 1000 ppm by mass or less, more preferably 100 ppm by mass or less, and particularly preferably 10 ppm by mass or less, with respect to 100% by mass of the polycarbonate resin.

The content of the remaining carbonic acid diester is preferably 1000 ppm by mass or less, more preferably 100 ppm by mass or less, and particularly preferably 10 ppm by mass or less, with respect to 100% by mass of the polycarbonate resin.

In particular, it is preferable that the contents of compounds such as phenol and t-butyl phenol are small, and it is preferable that the contents of these compounds are within the above-described range.

The content of a phenolic compound remaining in the polycarbonate resin can be measured by a method of analyzing a phenolic compound extracted from the polycarbonate resin, using gas chromatography.

The content of an alcoholic compound remaining in the polycarbonate resin can also be measured by a method of analyzing an alcoholic compound extracted from the polycarbonate resin, using gas chromatography.

The contents of a diol component and a carbonic acid diester remaining in the polycarbonate resin can also be measured by a method of extracting these compounds from the polycarbonate resin, and then analyzing them using gas chromatography.

The contents of a by-product alcoholic compound such as a phenolic compound, a diol component, and a carbonic acid diester may be reduced to such an extent that these compounds are undetectable. However, from the viewpoint of productivity, the polycarbonate resin may comprise very small amounts of these compounds in a range in which the compounds do not impair the effects of the present invention. In addition, plasticity can be improved upon the melting of the resin, if the resin may comprise very small amounts of the compounds.

The content of the remaining phenolic compound, diol component or carbonic acid diester may each be, for example, 0.01 ppm by mass or more, 0.1 ppm by mass or more, or 1 ppm by mass or more, with respect to 100% by mass of the polycarbonate resin.

The content of the remaining alcoholic compound may be, for example, 0.01 ppm by mass or more, 0.1 ppm by mass or more, or 1 ppm by mass or more, with respect to 100% by mass of the polycarbonate resin.

Besides, the contents of the by-product alcoholic compound such as a phenolic compound, the diol component and the carbonic acid diester in the polycarbonate resin can be regulated to be within the above-described ranges by appropriately adjusting conditions for polycondensation or the setting of apparatuses. Otherwise, the contents of these compounds can also be regulated by determining conditions for an extrusion step after completion of the polycondensation.

For example, the amount of the remaining by-product alcoholic compound such as a phenolic compound is related to the type of carbonic acid diester used in the polymerization of the polycarbonate resin, the temperature applied to the polymerization reaction, the polymerization pressure, etc. By adjusting these conditions, the amount of the remaining by-product alcoholic compound such as a phenolic compound can be reduced.

For example, when the polycarbonate resin is produced using dialkyl carbonate such as diethyl carbonate, the molecular weight is hardly increased, and low-molecular-weight polycarbonate is thereby obtained, so that the content of an alcoholic compound generated as a by-product tends to be increased. Such alkyl alcohol has high volatility, and thus, if it remains in the polycarbonate resin, the moldability of the resin tends to be deteriorated. In addition, when the amount of the remaining by-product alcoholic compound such as a phenolic compound is large, it is likely that problems regarding odor occur upon the molding of the resin, or it is also likely that the cleavage reaction of a resin skeleton progresses upon compounding, and a reduction in the molecular weight thereby occurs. Therefore, the content of the by-product alcoholic compound remaining in the obtained polycarbonate resin is preferably 3000 ppm by mass or less, with respect to the amount of the polycarbonate resin (100% by mass). The content of the remaining alcoholic compound is preferably 3000 ppm by mass or less, more preferably 1000 ppm by mass or less, and particularly preferably 300 ppm by mass or less, with respect to 100% by mass of the polycarbonate resin.

< Physical properties of thermoplastic resin >

(1) Refractive index (nD)

In one embodiment of the present invention, the thermoplastic resin is characterized in that it has a high refractive index, and the refractive index is preferably 1.650 to 1.695, more preferably 1.660 to 1.690, and particularly preferably 1.662 to 1.689. In the present invention, the refractive index can be measured by the method described in the after-mentioned Examples.

(2) Abbe number (ν)

In one embodiment of the present invention, the Abbe number of the thermoplastic resin is preferably 16.0 to 21.0, more preferably 16.3 to 20.5, and particularly preferably 16.6 to 20.2. In the present invention, the Abbe number can be measured by the method described in the after-mentioned Examples.

(3) Glass transition temperature (Tg)

In one embodiment of the present invention, the thermoplastic resin is characterized in that it has high heat resistance, and the glass transition temperature (Tg) is preferably 130°C to 190°C, more preferably 135°C to 180°C, and particularly preferably 140°C to 165°C. In the present invention, the glass transition temperature can be measured by the method described in the after-mentioned Examples.

(4) Polystyrene-converted weight average molecular weight (Mw)

In one embodiment of the present invention, the polystyrene-converted weight average molecular weight of the thermoplastic resin is preferably 10,000 to 100,000, more preferably 20,000 to 70,000, and particularly preferably 30,000 to 60,000.

(5) Melt volume-flow rate (MVR)

In one embodiment of the present invention, the melt volume-flow rate (MVR) of the thermoplastic resin is preferably 20 to 55, more preferably 25 to 50, and particularly preferably 30 to 45. In the present invention, the melt volume-flow rate (MVR) can be measured by the method described in the after-mentioned Examples.

(6) Haze

In one embodiment of the present invention, the haze of the thermoplastic resin is preferably 0.01 to 1.00, more preferably 0.05 to 0.50, and particularly preferably 0.10 to 0.30. In the present invention, the haze can be measured by the method described in the after-mentioned Examples.

(7) Birefringence in the lens surface

In one embodiment of the present invention, the birefringence in the lens surface of the thermoplastic resin is preferably 1 to 21, more preferably 2 to 15, and particularly preferably 2 to 13. In the present invention, the birefringence in the lens surface can be measured by the method described in the after-mentioned Examples.

< Thermoplastic resin composition >

Another embodiment of the present invention relates to a thermoplastic resin composition comprising the aforementioned thermoplastic resin and additives. The thermoplastic resin composition of the present embodiment may also comprise a resin other than the thermoplastic resin of the present invention comprising the aforementioned constituent units (A), (B) and (C), in a range in which such a resin does not impair the desired effects of the present embodiment. Such a resin is not particularly limited, and it may be, for example, at least one resin selected from the group consisting of a polycarbonate resin, a polyester resin, a polyester carbonate resin, a (meth)acrylic resin, a polyamide resin, a polystyrene resin, a cycloolefin resin, an acrylonitrile-butadiene-styrene copolymer resin, a vinyl chloride resin, a polyphenylene ether resin, a polysulfone resin, a polyacetal resin, and a methyl methacrylate-styrene copolymer resin. Various types of known resins can be used as such resins, and one type of such resin alone can be added to, or a combination of two or more types of such resins can be added to the thermoplastic resin composition.

[Antioxidant]

The thermoplastic resin composition preferably comprises an antioxidant as an additive described above.

As such an antioxidant, the thermoplastic resin composition preferably comprises at least one of a phenolic antioxidant and a phosphite-based antioxidant.

Examples of the phenolic antioxidant may include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazine-2,4,6(1H,3H,SH)-trione, 4,4',4"-(1-methylpropanyl-3-ylidene)tris(6-tert-butyl-m-cresol), 6,6'-di-tert-butyl-4,4'-butylidenedi-m-cresol, octadecyl 3-(3,5-di-tert-butyl-4-hydroxyphenyl)propionate, pentaerythritol-tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate]. Among these, pentaerythritol-tetrakis[3-(3,5-di-tert-butyl-4-hydroxyphenyl)propionate] is preferable.

Examples of the phosphite-based antioxidant may include 2-ethylhexyl diphenyl phosphite, isodecyl diphenyl phosphite, triisodecyl phosphite, triphenyl phosphite, 3,9-bis(octadecyloxy)-2,4,8,10-tetraoxy-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2'-methylenebis(4,6-di-tert-butylphenyl)2-ethylhexyl phosphite, tris(2,4-ditert-butylphenyl) phosphite, tris(nonylphenyl) phosphite, and tetra-C12-15-alkyl(propane-2,2-diylbis(4,1-phenylene)) bis(phosphite). Among these, 3,9-bis(2,6-di-tert-butyl-4-methylphenoxy)-2,4,8,10-tetraoxa-3,9-diphosphaspiro[5.5]undecane is preferable.

As such antioxidants, the aforementioned compounds may be used alone as a single type, or may also be used as a mixture of two or more types.

Also, in the present invention, 5,7-di-tert-butyl-3-(3,4-dimethylphenyl)-3H-benzofuran-2-one may be used as

an antioxidant other than a phenolic antioxidant and a phosphite-based antioxidant.

The antioxidant is preferably comprised in the thermoplastic resin composition in an amount of 1 ppm by weight to 3000 ppm by weight, with respect to the total weight of the resin composition. The content of the antioxidant in the thermoplastic resin composition is more preferably 50 ppm by weight to 2500 ppm by weight, further preferably 100 ppm by weight to 2000 ppm by weight, particularly preferably 150 ppm by weight to 1500 ppm by weight, and further particularly preferably 200 ppm by weight to 1500 ppm by weight.

[Release agent]

The thermoplastic resin composition preferably comprises a release agent as an additive described above.

Examples of the release agent may include ester compounds including glycerin fatty acid esters such as mono/diglyceride of glycerin fatty acid, glycol fatty acid esters such as propylene glycol fatty acid ester and sorbitan fatty acid ester, higher alcohol fatty acid esters, full esters of aliphatic polyhydric alcohol and aliphatic carboxy acid, and monofatty acid esters. When an ester of aliphatic polyhydric alcohol and aliphatic carboxy acid is used as a release agent, any of a monoester, a full ester, and the like can be adopted. For example, those other than full esters, such as a monoester, may be used.

Specific examples of the release agent may include the following substances: namely,

sorbitan fatty acid esters, such as sorbitan stearate, sorbitan laurate, sorbitan oleate, sorbitan trioleate, sorbitan tribehenate, sorbitan stearate, sorbitan tristearate, and sorbitan caprylate;
propylene glycol fatty acid esters, such as propylene glycol monostearate, propylene glycol monooleate, propylene glycol monobehenate, propylene glycol monolaurate, and propylene glycol monopalmitate;
higher alcohol fatty acid esters, such as stearyl stearate;
glycerin fatty acid ester monoglycerides, which include: monoglycerides including glycerin monostearate, glycerin monohydroxy stearate such as glycerin mono-12-hydroxy stearate, glycerin monooleate, glycerin monobehenate, glycerin monocaprylate, glycerin monocaprate and glycerin monolaurate; and mono/diglycerides including glycerin mono/distearate, glycerin mono/distearate, glycerin mono/dibehenate, glycerin mono/dioleate;
acetylated monoglycerides of glycerin fatty acid esters, such as glycerin diacetomonolaurate;
organic acid monoglycerides of glycerin fatty acid esters, such as citric acid fatty acid monoglyceride, succinic acid fatty acid monoglyceride, and diacetyl tartaric acid fatty acid monoglyceride; and
polyglycerin fatty acid esters, such as diglycerin stearate, diglycerin laurate, diglycerin oleate, diglycerin monostearate, diglycerin monolaurate, diglycerin monomyristate, diglycerin monooleate, tetraglycerin stearate, decaglycerin laurate, decaglycerin oleate, and polyglycerin polyricinoleate.
Among these, glycerin monostearate is preferred as a release agent.

The release agent is preferably comprised in the thermoplastic resin composition in an amount of 1 ppm by weight to 5000 ppm by weight, with respect to the total weight of the resin composition. The content of the release agent in the thermoplastic resin composition is more preferably 50 ppm by weight to 4000 ppm by weight, further preferably 100 ppm by weight to 3500 ppm by weight, particularly preferably 500 ppm by weight to 13000 ppm by weight, and further particularly preferably 1000 ppm by weight to 2500 ppm by weight.

[Other additives]

Additives other than the aforementioned antioxidant and release agent may also be added to the thermoplastic resin composition.

Examples of the additives that may be comprised in the thermoplastic resin composition may include a compounding agent, a catalyst inactivator, a thermal stabilizer, a plasticizer, a filler, an ultraviolet absorber, a rust inhibitor, a dispersant, an antifoaming agent, a leveling agent, a flame retardant, a lubricant, a dye, a pigment, a bluing agent, a nucleating agent, and a clearing agent.

The content of additives other than the antioxidant and the release agent in the thermoplastic resin composition is preferably 10 ppm by weight to 5.0% by weight, more preferably 100 ppm by weight to 2.0% by weight, and further preferably 1000 ppm by weight to 1.0% by weight, but is not limited thereto.

The aforementioned additives are likely to adversely affect transmittance. Thus, it is preferable not to add such additives excessively, and more preferably, the total additive amount is, for example, within the aforementioned range.

In the method for producing the thermoplastic resin composition of the present invention, after completion of the polymerization reaction, the catalyst may be removed or deactivated in order to retain heat stability and hydrolysis stability. However, it is not always necessary to deactivate the catalyst. When the catalyst is deactivated, a method of deactivating the catalyst by addition of a known acidic substance can be preferably carried out. Specific examples of

the acidic substance that is preferably used herein may include: esters such as butyl benzoate; aromatic sulfonic acids such as p-toluenesulfonic acid; aromatic sulfonic acid esters, such as butyl p-toluenesulfonate and hexyl p-toluenesulfonate; phosphoric acids, such as phosphorous acid, phosphoric acid, and phosphonic acid; phosphorous acid esters, such as triphenyl phosphite, monophenyl phosphite, diphenyl phosphite, diethyl phosphite, di-n-propyl phosphite, di-n-butyl phosphite, di-n-hexyl phosphite, dioctyl phosphite, and monooctyl phosphite; phosphoric acid esters, such as triphenyl phosphate, diphenyl phosphate, monophenyl phosphate, dibutyl phosphate, dioctyl phosphate, and monooctyl phosphate; phosphonic acids, such as diphenyl phosphonate, dioctyl phosphonate, and dibutyl phosphonate; phosphonic acid esters such as diethyl phenyl phosphonate; phosphines, such as triphenylphosphine and bis(diphenylphosphino)ethane; boric acids, such as boric acid and phenyl borate; aromatic sulfonates, such as tetrabutylphosphonium dodecylbenzenesulfonate; organic halides, such as chloride stearate, benzoyl chloride, and p-toluenesulfonyl chloride; alkyl sulfates such as dimethyl sulfonate; and organic halogenates such as benzyl chloride. From the viewpoints of the effects of the deactivating agent, stability to the resin, and the like, p-toluenesulfonic acid, butyl sulfonate, or tetrabutylphosphonium dodecylbenzenesulfonate are particularly preferable. Such a deactivating agent is used in an amount of 0.01 to 50 times moles, and preferably 0.3 to 20 times moles, with respect to the amount of the catalyst. If the amount of the deactivating agent is smaller than 0.01 time mole with respect to the amount of the catalyst, deactivating effects unfavorably become insufficient. On the other hand, if the amount of the deactivating agent is larger than 50 times moles with respect to the amount of the catalyst, it is unfavorable that the heat resistance of the resin is decreased and the molded body is easily colored.

The kneading of the deactivating agent into the reaction product may be carried out immediately after completion of the polymerization reaction, or may also be carried out after the pelletizing of the resin following the polymerization. Moreover, in addition to the deactivating agent, other additives can be added by the same method as that described above.

< Optical member >

The thermoplastic resin or the thermoplastic resin composition of the present invention (hereinafter simply abbreviated as a "resin composition") can be preferably used in an optical member. In one embodiment of the present invention, an optical member comprising the resin composition of the present invention is provided. In one embodiment of the present invention, the optical member may include, but is not limited to, an optical disk, a transparent conductive substrate, an optical card, a sheet, a film, an optical fiber, a lens, a prism, an optical film, a substrate, an optical filter, a hard coat film, and the like. The resin composition of the present invention has high fluidity, and can be molded according to a cast method. Hence, the present resin composition is preferably used, in particular, in production of a thin optical member. In a preferred embodiment of the present invention, the optical member produced using the resin composition of the present invention may be an optical lens. In another preferred embodiment of the present invention, the optical member produced using the resin composition of the present invention may be an optical film.

When an optical member comprising the resin composition of the present invention is produced according to injection molding, the optical member is preferably molded under conditions of a cylinder temperature of 260°C to 350°C and a mold temperature of 90°C to 170°C. The optical member is more preferably molded under conditions of a cylinder temperature of 270°C to 320°C and a mold temperature of 100°C to 160°C. When the cylinder temperature is higher than 350°C, the resin composition is decomposed and colored. On the other hand, when the cylinder temperature is lower than 260°C, the melt viscosity becomes high, and it easily becomes difficult to mold the optical member. Moreover, when the mold temperature is higher than 170°C, it easily becomes difficult to remove a molded piece consisting of the resin composition from a mold. On the other hand, when the mold temperature is lower than 90°C, the resin is hardened too quickly in a mold upon the molding thereof, and it becomes difficult to control the shape of a molded piece, or it easily becomes difficult to sufficiently transcribe a vehicle placed in a mold.

< Optical lens >

In one embodiment of the present invention, the resin composition can be preferably used in an optical lens. Since the optical lens produced using the resin composition of the present invention has a high refractive index and is excellent in terms of heat resistance, it can be used in fields in which expensive glass lenses having a high refractive index have been conventionally used, such as telescopes, binoculars and TV projectors, and thus, the optical lens produced using the present resin composition is extremely useful.

For instance, regarding a lens used for smart phones, a lens molded from a thermoplastic resin comprising the constituent units (A), (B) and (C) is overlapped with a lens molded from a resin comprising a constituent unit derived from a monomer represented by any one of the following formulae, so that the lenses can be used as a lens unit:

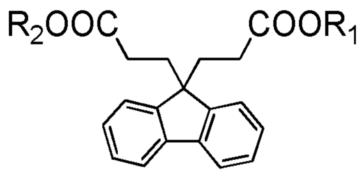

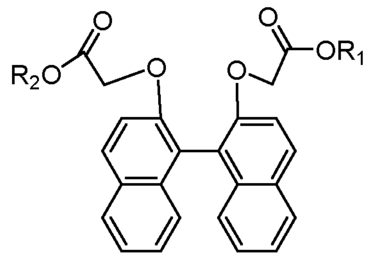

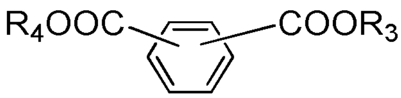

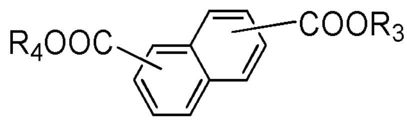

wherein $R_1$ and $R_2$ each independently represent a hydrogen atom, a methyl group or an ethyl group, and $R_3$ and $R_4$ each independently represent a hydrogen atom, a methyl group, an ethyl group or alkylene glycol containing 2 to 5 carbon atoms.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the central portion is preferably 0.05 to 3.0 mm, more preferably 0.05 to 2.0 mm, and further preferably 0.1 to 2.0 mm. In addition, the diameter is preferably 1.0 mm to 20.0 mm, more preferably 1.0 to 10.0 mm, and further preferably , 3.0 to 10.0 mm. Further, regarding the shape thereof, the optical lens of the present invention is preferably a meniscus lens, in which one surface is a convex, and the other surface is a concave.

The optical lens of the present invention is molded according to any given method such as die molding, cutting, polishing, laser machining, electrical discharge machining, or etching. Among these methods, die molding is more preferable in terms of production costs.

< Optical film >

In one embodiment of the present invention, the resin composition can be preferably used in optical films. In particular, since the optical film produced using the polycarbonate resin of the present invention is excellent in terms of transparency and heat resistance, it can be preferably used for films for use in liquid crystal substrates, optical memory cards, etc.

In order to avoid the mixing of foreign matters into the optical lens, the molding environment must be naturally a low-dust environment, and the class is preferably 6 or less, and more preferably 5 or less.

[Second Embodiment]

< Polycarbonate resin >

A second embodiment of the present invention relates to a polycarbonate resin, comprising a constituent unit represented by the following general formula (1B), a binaphthol derivative unit represented by the following general formula (2B), and a fluorene derivative unit represented by the following general formula (3B):

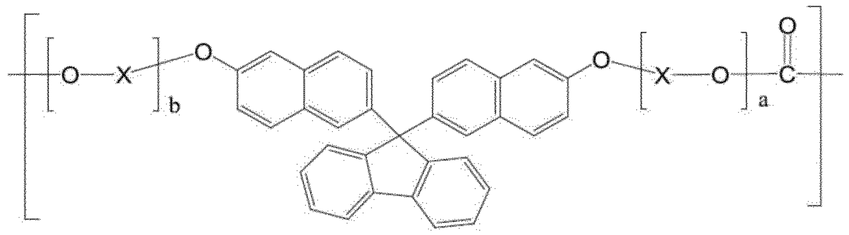

(1B)

wherein X represents an alkylene group containing 1 to 4 carbon atoms, and a and b each independently represent an integer of 1 to 10,

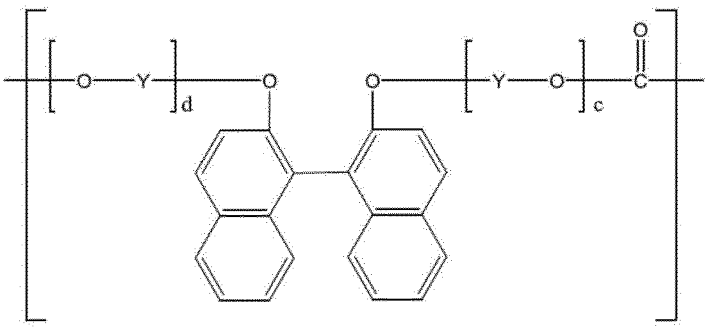

(2B)

wherein Y represents an alkylene group containing 1 to 4 carbon atoms, and c and d each independently represent an integer of 1 to 10, and

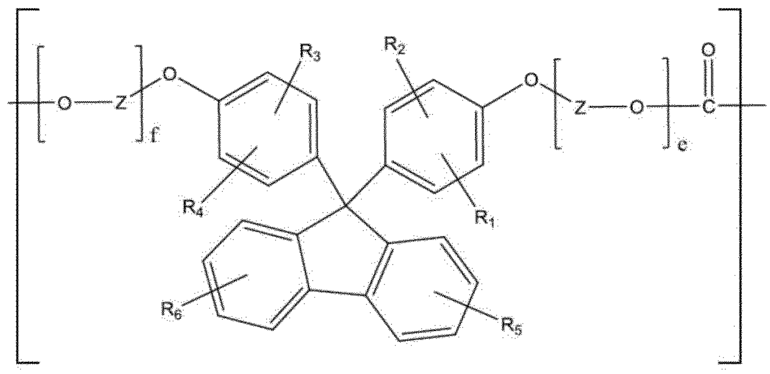

(3B)

wherein

Z represents an alkylene group containing 1 to 4 carbon atoms,
$R_1$ to $R_6$ each independently represent a hydrogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and
e and f each independently represent an integer of 0 to 5.

Preferably, the polycarbonate resin of the present invention substantially consists of the constituent units represented by the general formulae (1B) to (3B). In the present description, the phrase "substantially consist of ..." is used to mean that the polycarbonate resin of the present invention may comprise other constituent units within a range in which the effects of the invention are not impaired. For example, among the constituent units of the polycarbonate resin of the present invention, the constituent units represented by the general formulae (1B) to (3B) account for preferably 90% or more of, more preferably 95% or more of, and further preferably 98% or more of the constituent units of the

present polycarbonate resin.

In the polycarbonate resin of the present invention, the ratio of the constituent unit represented by the general formula (1B) is 1% by mole or more and less than 10% by mole, the ratio of the constituent unit represented by the general formula (2B) is 10% to 60% by mole, and the ratio of the constituent unit represented by the general formula (3B) is 5% to 80% by mole. Moreover, in order to obtain a resin having a small absolute value of birefringence intensity and a small birefringence in the lens surface, it is preferable that the ratio of the constituent unit represented by the general formula (1B) is 2% to 9% by mole, the ratio of the constituent unit represented by the general formula (2B) is 20% to 60% by mole, and the ratio of the constituent unit represented by the general formula (3B) is 30% to 70% by mole; and it is particularly preferable that the ratio of the constituent unit represented by the general formula (1B) is 3% to 8% by mole, the ratio of the constituent unit represented by the general formula (2B) is 30% to 60% by mole, and the ratio of the constituent unit represented by the general formula (3B) is 40% to 60% by mole.

Regarding the polycarbonate resin of the present invention, how the constituent units represented by the general formulae (1B) to (3B) are comprised in the resin is not particularly limited. In one aspect of the present invention, the polycarbonate resin may comprise a copolymer comprising the constituent units represented by the general formulae (1B) to (3B), or the polycarbonate resin may be a ternary resin comprising homopolymers each consisting of individual constituent units. Alternatively, the polycarbonate resin may be formed by blending a copolymer comprising the constituent units represented by the general formulae (1B) and (2B) with a homopolymer comprising the constituent unit represented by the general formula (3B), or may also be formed by blending a copolymer comprising the constituent units represented by the general formulae (1B) and (2B) with a copolymer comprising the constituent units represented by the general formulae (1B) and (3B).

The polycarbonate resin of the present invention may comprise any of random, block, and alternating copolymer structures.

The polystyrene-converted weight average molecular weight (Mw) of the polycarbonate resin of the present invention is preferably 20,000 to 200,000. The polystyrene-converted weight average molecular weight (Mw) of the present polycarbonate resin is more preferably 25,000 to 120,000, further preferably 28,000 to 55,000, and particularly preferably 30,000 to 45,000.

If Mw is smaller than 20,000, the molded body becomes fragile, which is unfavorable. If Mw is larger than 200,000, the melt viscosity becomes high, and it becomes difficult to remove the resin after the production thereof. Further, the flowability is also deteriorated, and thus, it becomes difficult to perform injection molding in a molten state, which is unfavorable.

The refractive index (nD) of the polycarbonate resin of the present invention at 23°C at a wavelength of 589 nm is preferably 1.635 to 1.695, more preferably 1.640 to 1.690, further preferably 1.645 to 1.685, and particularly preferably 1.650 to 1.680. The polycarbonate resin of the present invention has a high refractive index (nD) and thus, the present polycarbonate resin is suitable as materials for optical lenses. Regarding a film with a thickness of 0.1 mm, the refractive index can be measured by the method of JIS B 7071-2: 2018, using an Abbe's refractometer.

The Abbe number (ν) of the polycarbonate resin of the present invention is preferably 24 or less, more preferably 22 or less, and further preferably 21 or less. The Abbe number can be calculated from the refractive indexes at 23°C at wavelengths of 486 nm, 589 nm and 656 nm, using the following equation:

$$\nu = (nD-1) / (nF-nC),$$

wherein

nD: Refractive index at wavelength of 589 nm,
nC: Refractive index at wavelength of 656 nm, and
nF: Refractive index at wavelength of 486 nm.

The melt volume-flow rate (MVR) of the polycarbonate resin of the present invention is preferably 10 to 100, more preferably 30 to 100, and particularly preferably 30 to 50. In the present invention, MVR can be measured by the method described in the after-mentioned Examples.

The birefringence intensity of the polycarbonate resin of the present invention is preferably -0.6 to +0.7, more preferably -0.5 to +0.5, and particularly preferably -0.3 to +0.3. In the present invention, the birefringence intensity can be measured by the method described in the after-mentioned Examples.

The birefringence in the lens surface of the polycarbonate resin of the present invention is preferably 0.1 to 15, more preferably 1 to 10, and particularly preferably 2 to 7. In the present invention, the birefringence in the lens surface can be measured by the method described in the after-mentioned Examples.

The haze of the polycarbonate resin of the present invention is preferably 0.05 to 3.00, and more preferably

0.10 to 2.00. In the present invention, the haze can be measured by the method described in the after-mentioned Examples.

Another resin is blended with the polycarbonate resin of the present invention, and the blended resin can be then subjected to the production of a molded body. Examples of such other resin may include polyamide, polyacetal, polycarbonate, modified polyphenylene ether, polyethylene terephthalate, and polybutylene terephthalate.

Furthermore, to the polycarbonate resin of the present invention, an antioxidant, a mold release agent, an ultraviolet absorber, a fluidity modifier, a crystal nucleating agent, a strengthening agent, a dye, an antistatic agent, an antibacterial agent, or the like can be added.

Examples of the molding method may include injection molding, compression molding, casting, roll forming, extrusion molding, and stretching, but are not limited thereto.

When the polycarbonate resin of the present invention is used in injection molding, the glass transition temperature (Tg) is preferably 90°C to 180°C, more preferably 95°C to 175°C, further preferably 100°C to 170°C, still further preferably 130°C to 170°C, and particularly preferably 135°C to 150°C. If Tg is lower than 90°C, the operating temperature range is unfavorably narrowed. On the other hand, if Tg exceeds 180°C, the melting temperature of the resin becomes high, and decomposition of the resin or coloration unfavorably easily occurs. If the glass transition temperature of the resin is too high, it causes a significant difference between a mold temperature and the glass transition temperature of the resin, while using a versatile mold temperature controller. Thus, in the intended use in which a product is required to have strict surface accuracy, the use of a resin having an excessively high glass transition temperature is difficult and is also unfavorable. Moreover, from the viewpoints of molding fluidity and molding heat resistance, the lower limit value of Tg is preferably 130°C, and more preferably 135°C. The upper limit value of Tg is preferably 160°C, and more preferably 150°C.

The residual amount of phenol contained in the polycarbonate resin of the present invention is preferably 500 ppm or less, more preferably 300 ppm or less, and further preferably 50 ppm or less.

The residual amount of diphenyl carbonate (DPC) contained in the polycarbonate resin of the present invention is preferably 200 ppm or less, more preferably 100 ppm or less, and further preferably 50 ppm or less.

< Method for producing polycarbonate resin >

The polycarbonate resin having the constituent units represented by the general formulae (1B) to (3B) according to the present invention can be produced by using compounds represented by the following general formulae (4B) to (6B) as dihydroxy components, and allowing such a dihydroxy component to react with a carbonate precursor substance such as carbonate diester:

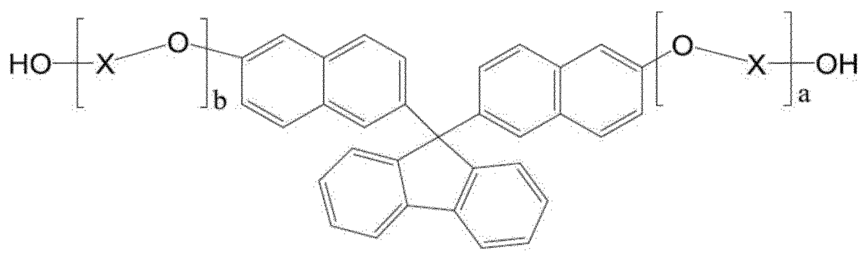

(4B)

wherein X represents an alkylene group containing 1 to 4 carbon atoms, and a and b each independently represent an integer of 1 to 10,

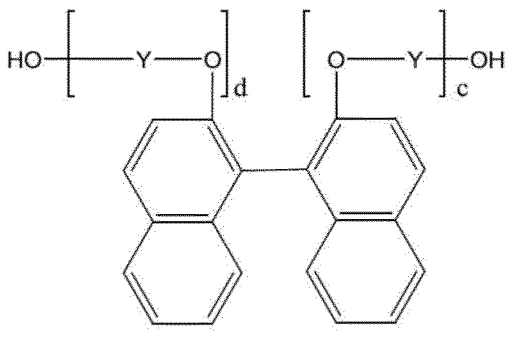

(5B)

wherein Y represents an alkylene group containing 1 to 4 carbon atoms, c and d each independently represent an integer of 1 to 10, or

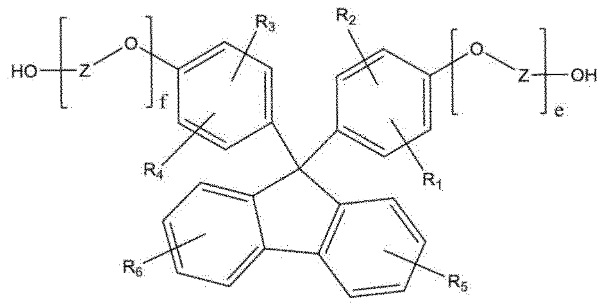

(6B)

wherein

Z represents an alkylene group containing 1 to 4 carbon atoms,

$R_1$ to $R_6$ each independently represent a hydrogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and

e and f each independently represent an integer of 0 to 5. Specifically, the polycarbonate resin of the present invention can be produced by allowing the compound represented by each of the general formulae (4B) to (6B) to react with a carbonate precursor substance such as carbonate diester, in the presence of a basic compound catalyst, a transesterification catalyst, or a mixed catalyst of them, or in the absence of a catalyst, according to a melt polycondensation method.

The compound represented by the general formula (4B) may include 9,9-bis(hydroxy(poly)alkoxynaphthyl)fluorenes. Preferred examples of the compound represented by the general formula (4) may include 9,9-bis[6-(1-hydroxymethoxy)naphthalen-2-yl]fluorene, 9,9-bis[6-(2-hydroxyethoxy)naphthalen-2-yl]fluorene, 9,9-bis[6-(3-hydroxypropoxy)naphthalen-2-yl]fluorene, and 9,9-bis[6-(4-hydroxybutoxy)naphthalen-2-yl]fluorene. Among others, 9,9-bis[6-(2-hydroxyethoxy)naphthalen-2-yl]fluorene is preferable. These compounds may be used alone, or may also be used in combination of two or more types.

When the compound represented by the general formula (4B) is produced, compounds, in which either a or b is 0, may be by-produced as impurities in some cases. The total content of such impurities is preferably 1000 ppm or less, more preferably 500 ppm or less, further preferably 200 ppm or less, and particularly preferably 100 ppm or less, in the monomers comprising the compound represented by the general formula (4B) as a main component. Furthermore, other than such impurities, fluorenone as one of raw materials may also be comprised as an impurity. The content of the fluorenone is preferably 1000 ppm or less, more preferably 100 ppm or less, further preferably 50 ppm or less, and particularly preferably 10 ppm or less, in the monomers comprising the compound represented by the general formula (4B) as a main component. There may be a case where the fluorenone comprised in the monomers comprising the compound represented by the general formula (4B) as a main component remains in the resin after polymerization. The lower the fluorenone content, the better the hue of the resin that can be obtained, and thus, it is preferable. Furthermore, although a compound, in which a and b are not identical to each other (i.e. $a \neq b$) in the general formula (4B), is not an impurity, the total content of such a compound is preferably 50 ppm or less, and more preferably 20 ppm or less, in the monomers comprising the compound represented by the general formula (4B) as a main component.

The compound represented by the general formula (4B) can be produced by various synthetic methods. For example, as described in Japanese Patent No. 5442800, 9,9-bis(hydroxynaphthyl)fluorene is obtained by utilizing (a) a method of reacting fluorene with hydroxynaphthalene in the presence of hydrogen chloride gas and mercaptocarboxylic acid, (b) a method of reacting 9-fluorenone with hydroxynaphthalene in the presence of an acid catalyst (and alkyl mercaptan), (c) a method of reacting fluorene with hydroxynaphthalene in the presence of hydrochloric acid and thiol (mercaptocarboxylic acid, etc.), (d) a method of reacting fluorene with hydroxynaphthalene in the presence of sulfuric acid and thiol (mercaptocarboxylic acid, etc.), followed by crystallization using a crystallization solvent composed of hydrocarbon and a polar solvent to produce bisnaphthol fluorene, or other methods, and thereafter, a compound corresponding to an [XO]a group and an [XO]b group (alkylene oxide, haloalkanol, etc.) is allowed to react with the 9,9-bis(hydroxynaphthyl)fluorene, so as to produce the compound represented by the general formula (4B). For example, 9,9-bis[6-(2-hydroxyethoxy)naphthyl]fluorene may be obtained by reacting 9,9-bis[6-hydroxynaphthyl]fluorene with 2-chloroethanol under alkaline conditions.

Examples of the dihydroxy compound represented by the general formula (5B) may include 2,2'-bis(1-hydroxymethoxy)-1,1'-binaphthalene, 2,2'-bis(2-hydroxyethoxy)-1,1'-binaphthalene, 2,2'-bis(3-hydroxypropyloxy)-1,1'-binaphthalene, and 2,2'-bis(4-hydroxybutoxy)-1,1'-binaphthalene. Among others, 2,2'-bis(2-hydroxyethoxy)-1,1'-binaphthalene (hereinafter abbreviated as "BHEBN" at times) is preferable. These compounds may be used alone, or may also be used in combination of two or more types.

When the compound represented by the general formula (5B) is produced, compounds, in which either c or d is 0, may be by-produced as impurities in some cases. The total content of such impurities is preferably 1000 ppm or less, more preferably 500 ppm or less, further preferably 200 ppm or less, and particularly preferably 100 ppm or less, in the monomers comprising the compound represented by the general formula (5B) as a main component. Furthermore, although a compound, in which c and d are not identical to each other (i.e. $c \neq d$) in the general formula (5B), is not an impurity, the total content of such a compound is preferably 50 ppm or less, and more preferably 20 ppm or less, in the monomers comprising the compound represented by the general formula (5B) as a main component.

Examples of the dihydroxy compound represented by the general formula (6B) may include 9,9-bis[4-(2-hydroxyethoxy)phenyl]fluorene (hereinafter abbreviated as "BPEF" at times, 9,9-bis[4-(2-hydroxyethoxy)-3-methylphenyl]fluorene, 9,9-bis[4-(2-hydroxyethoxy)-3-tert-butylphenyl]fluorene, 9,9-bis[4-(2-hydroxyethoxy)-3-isopropylphenyl]fluorene, 9,9-bis[4-(2-hydroxyethoxy)-3-cyclohexylphenyl]fluorene, and 9,9-bis[4-(2-hydroxyethoxy)-3-phenylphenyl]fluorene (hereinafter abbreviated as "BPPEF" at times). Among others, 9,9-bis[4-(2-hydroxyethoxy)phenyl]fluorene and 9,9-bis[4-(2-hydroxyethoxy)-3-phenylphenyl]fluorene are preferable. These compounds may be used alone, or may also be used in combination of two or more types.

When the compound represented by the general formula (6B) is produced, compounds, in which either e or f is 0, may be by-produced as impurities in some cases. The total content of such impurities is preferably 1000 ppm or less, more preferably 500 ppm or less, further preferably 200 ppm or less, and particularly preferably 100 ppm or less, in the monomers comprising the compound represented by the general formula (6B) as a main component. Furthermore, although a compound, in which e and f are not identical to each other (i.e. $e \neq f$) in the general formula (6B), is not an impurity, the total content of such a compound is preferably 50 ppm or less, and more preferably 20 ppm or less, in the monomers comprising the compound represented by the general formula (6B) as a main component.

Examples of the aromatic dihydroxy compound that can be used in combination, other than the above-described compounds, may include bisphenol A, bisphenol AP, bisphenol AF, bisphenol B, bisphenol BP, bisphenol C, bisphenol E, bisphenol F, bisphenol G, bisphenol M, bisphenol S, bisphenol P, bisphenol PH, bisphenol TMC, and bisphenol Z.

Examples of the carbonate diester used in the present invention may include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Among these, diphenyl carbonate is particularly preferable. Diphenyl carbonate is used preferably at a ratio of 0.97 to 1.20 mole, and more preferably at a ratio of 0.98 to 1.10 mole, with respect to 1 mole of a total of the dihydroxy compounds.

Among the transesterification catalysts, particular examples of the basic compound catalyst may include an alkali metal compound, an alkaline-earth metal compound, and a nitrogen-containing compound.

Examples of the alkali metal compound used in the invention of the present application may include the organic acid salts, inorganic salts, oxides, hydroxides, hydrides or alkoxides of alkali metals. Specific examples of the alkali metal compound used herein may include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium borophenylate, sodium benzoate, potassium benzoate, cesium benzoate, lithium benzoate, disodium hydrogen phosphate, dipotassium hydrogen phosphate, dilithium hydrogen phosphate, disodium phenyl phosphate, the disodium salts, dipotassium salts, dicesium salts or dilithium salts of bisphenol A, and the sodium salts, potassium salts, cesium salts or lithium salts of phenol.

Examples of the alkaline-earth metal compound may include the organic acid salts, inorganic salts, oxides, hydroxides, hydrides or alkoxides of the alkaline-earth metal compounds. Specific examples of the alkaline-earth metal compound used herein may include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenyl phosphate.

Examples of the nitrogen-containing compound may include quaternary ammonium hydroxides and salts thereof, and amines. Specific examples of the nitrogen-containing compound used herein may include: quaternary ammonium hydroxides having an alkyl group, an aryl group, etc., such as tetramethylammonium hydroxide, tetraethylammonium hydroxide, tetrapropylammonium hydroxide, tetrabutylammonium hydroxide, and trimethylbenzylammonium hydroxide; tertiary amines such as triethylamine, dimethylbenzylamine, and triphenylamine; secondary amines such as diethylamine

and dibutylamine; primary amines such as propylamine and butylamine; imidazoles such as 2-methylimidazole, 2-phenylimidazole, and benzoimidazole; and bases or basic salts, such as ammonia, tetramethylammonium borohydride, tetrabutylammonium borohydride, tetrabutylammonium tetraphenylborate, and tetraphenylammonium tetraphenylborate.

As transesterification catalysts, salts of zinc, tin, zirconium, lead, etc. are preferably used, and these salts can be used alone or in combination.

Specific examples of the transesterification catalyst used herein may include zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate, zirconium oxyacetate, zirconium tetrabutoxide, lead(II) acetate, and lead(IV) acetate.

Such a catalyst is used at a ratio of $1 \times 10^{-9}$ to $1 \times 10^{-3}$ moles, and preferably at a ratio of $1 \times 10^{-7}$ to $1 \times 10^{-4}$ moles, with respect to 1 mole of a total of dihydroxy compounds.

In the melt polycondensation method, the above-described raw materials and catalysts are used, and melt polycondensation is carried out under heating, further, under ordinary pressure or reduced pressure, while removing by-products according a transesterification reaction.

In the melt polycondensation in the present composition system, the compounds represented by the general formulae (4B) to (6B) and carbonate diester are melted in a reaction vessel, and thereafter, the reaction is desirably carried out in a state in which monohydroxy compounds generated as by-products are retained. In order to allow such monohydroxy compounds to retain, pressure can be controlled, for example, by closing the reaction apparatus, or by reducing or increasing the pressure in the reaction apparatus. The reaction time necessary for this step is 20 minutes or more and 240 minutes or less, preferably 40 minutes or more and 180 minutes or less, and particularly preferably 60 minutes or more and 150 minutes or less. During this step, if the monohydroxy compounds generated as by-products are removed immediately after the generation thereof, the finally obtained polycarbonate resin has only a low content of polymer. However, if the monohydroxy compounds generated as by-products are retained in the reaction vessel for a certain period of time, the finally obtained polycarbonate resin has a high content of polymer.

The melt polycondensation reaction may be carried out either in a continuous system or in a batch system. The reaction apparatus used to perform the above-described reaction may be a vertical reaction apparatus equipped with an anchor-type impeller, a max-blend impeller, a helical ribbon-type impeller, etc., or a horizontal reaction apparatus equipped with paddle blades, lattice blades, glasses blades, etc., or further, an extruder-type reaction apparatus equipped with a screw, etc. Moreover, a reaction apparatus prepared by appropriately combining the aforementioned reaction apparatuses with one another is preferably used, while taking into consideration the viscosity of a polymer.

In the method for producing the polycarbonate resin used in the present invention, after completion of the polymerization reaction, in order to maintain heat stability and hydrolytic stability, the catalyst may be removed or deactivated. A method of deactivating a catalyst by addition of a known acidic substance can be preferably applied. Specific examples of the acidic substances that are preferably used herein may include: esters such as butyl benzoate; aromatic sulfonic acids such as p-toluenesulfonic acid; aromatic sulfonic acid esters, such as butyl p-toluenesulfonate and hexyl p-toluenesulfonate; phosphoric acids, such as phosphorous acid, phosphoric acid, and phosphonic acid; phosphorous acid esters, such as triphenyl phosphite, monophenyl phosphite, diphenyl phosphite, diethyl phosphite, di-n-propyl phosphite, di-n-butyl phosphite, di-n-hexyl phosphite, dioctyl phosphite, and monooctyl phosphite; phosphoric acid esters, such as triphenyl phosphate, diphenyl phosphate, monophenyl phosphate, dibutyl phosphate, dioctyl phosphate, and monooctyl phosphate; phosphonic acids, such as diphenyl phosphonate, dioctyl phosphonate, and dibutyl phosphonate; phosphonic acid esters such as diethyl phenyl phosphonate; phosphines, such as triphenylphosphine and bis(diphenylphosphino)ethane; boric acids, such as boric acid and phenyl borate; aromatic sulfonates, such as tetrabutylphosphonium dodecylbenzenesulfonate; organic halides, such as chloride stearate, benzoyl chloride, and p-toluenesulfonyl chloride; alkyl sulfates such as dimethyl sulfonate; and organic halogenates such as benzyl chloride. Among these acidic substances, butyl p-toluenesulfonate and tetrabutylphosphonium dodecylbenzenesulfonate are particularly preferably used. Such a deactivating agent is used in an amount of 0.01 to 50 times moles, and preferably 0.3 to 20 times moles, with respect to the amount of the catalyst. If the amount of the deactivating agent is smaller than 0.01 time mole with respect to the amount of the catalyst, deactivating effects unfavorably become insufficient. On the other hand, if the amount of the deactivating agent is larger than 50 times moles with respect to the amount of the catalyst, it is unfavorable that the heat resistance of the resin is decreased and the molded body is easily colored.

After deactivation of the catalyst, a step of removing a low-boiling-point compound from the polymer by devolatilization at a pressure of 0.1 to 1 mmHg and at a temperature of 200°C to 350°C may be established. For this step, a horizontal apparatus equipped with stirring blades having excellent surface renewal ability, such as paddle blades, lattice blades or glasses blades, or a thin film evaporator is preferably used.

The polycarbonate resin of the present invention is desired to contain a foreign matter in an amount as small as possible, and thus, filtration of melted raw materials, filtration of a catalyst solution, and the like are preferably carried out. The thickness of a filter mesh is preferably 5 μm or less, and more preferably 1 μm or less. Moreover, filtration of

the generated resin through a polymer filter is preferably carried out. The thickness of the polymer filter mesh is preferably 100 μm or less, and more preferably 30 μm or less. Furthermore, a step of collecting resin pellets must be naturally performed under a low-dust environment, and the class is preferably 6 or less, and more preferably 5 or less.

When the polycarbonate resin comprising the constituent units represented by the general formulae (1B) to (3B) is produced according to another aspect of the present invention, a copolymer comprising the constituent units represented by the general formulae (1B) to (3B) may be produced, using the compounds represented by the general formulae (4B) to (6B); or the compounds represented by the general formulae (4B) to (6B) may be polymerized, separately, and a ternary resin comprising homopolymers each consisting of individual constituent units may be produced. Otherwise, a copolymer comprising the constituent units represented by the general formulae (1B) and (2B) and a homopolymer comprising the constituent unit represented by the general formula (3B) may be polymerized and may be then blended, or a copolymer comprising the constituent units represented by the general formulae (1B) and (2B) and a copolymer comprising the constituent units represented by the general formulae (1B) and (3B) may be copolymerized and may be then blended.

< Optical molded body >

Using the polycarbonate resin of the present invention, an optical molded body can be produced. The present polycarbonate resin is molded by any given method, such as, for example, an injection molding method, a compression molding method, an extrusion molding method, or a solution casting method. Since the polycarbonate resin of the present invention is excellent in moldability and heat resistance, it can be particularly advantageously used in optical lenses that require injection molding. Upon the molding, the polycarbonate resin of the present invention can be mixed with other resins such as another polycarbonate resin or a polyester resin, and can be then used. Moreover, additives such as an antioxidant, a processing stabilizer, a light stabilizer, a polymerized metal-deactivating agent, a flame retardant, a lubricant, an antistatic agent, a surfactant, an antibacterial agent, a mold release agent, an ultraviolet absorber, a plasticizer, and a compatibilizer, may also be mixed with the present polycarbonate resin.

Examples of the antioxidant may include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocynnamide), 3,5-di-tert-butyl-4-hydroxy-benzylphosphonate-diethyl ester, tris(3,5-di-tert-butyl-4-hydroxybenzyl)isocyanurate, and 3,9-bis{1,1-dimethyl-2-[β-(3-tert-butyl-4-hydroxy-5-methylphenyl)propionyloxy]ethyl}-2,4,8,10-tetraoxaspiro(5,5)undecane, 5,7-di-tert-butyl-3-(3,4-dimethylphenyl)-3H-benzofuran-2-one, and 3,9-bis(2,6-di-tert-butyl-4-methylphenoxy)-2,4,8,10-tetraoxa-3,9-diphosphaspiro[5.5]undecane. Among these, pentaerythritol-tetrakis[3-(3,5-di-tert-butyl-4-hydroxyphenyl)propionate], 5,7-di-tert-butyl-3-(3,4-dimethylphenyl)-3H-benzofuran-2-one, and 3,9-bis(2,6-di-tert-butyl-4-methylphenoxy)-2,4,8,10-tetraoxa-3,9-diphosphaspiro[5.5]undecane are particularly preferably used. The content of the antioxidant in the polycarbonate resin is preferably 0.001 to 0.3 parts by weight, and more preferably 0.05 to 0.2 parts by weight, with respect to 100 parts by weight of the polycarbonate resin.

Examples of the processing stabilizer may include a phosphorus-based processing heat stabilizer and a sulfur-based processing heat stabilizer. Examples of the phosphorus-based processing heat stabilizer may include phosphorous acid, phosphoric acid, phosphonous acid, phosphonic acid, and esters thereof. Specific examples may include triphenyl phosphite, tris(nonylphenyl) phosphite, tris(2,4-di-tert-butylphenyl) phosphite, tris(2,6-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritoldi phosphite, 2,2-methylenebis(4,6-di-tert-butylphenyl)octyl phosphite, bis(nonylphenyl)pentaerythritoldi phosphite, bis(2,4-dicumylphenyl)pentaerythritoldi phosphite, bis(2,4-di-tert-butylphenyl)pentaerythritoldi phosphite, distearylpentaerythritoldi phosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, benzenephosphonate dimethyl, benzenephosphonate diethyl, benzenephosphonate dipropyl, tetrakis(2,4-di-t-butylphenyl)-4,4'-biphenylene diphosphonite, tetrakis(2,4-di-t-butylphenyl)-4,3'-biphenylene diphosphonite, tetrakis(2,4-di-t-butylphenyl)-3,3'-biphenylene diphosphonite, bis(2,4-di-tert-butylphenyl)-4-phenyl-phenyl phosphonite, and bis(2,4-di-tert-butylphenyl)-3-phenyl-phenyl phosphonite. The content of the phosphorus-based processing heat stabilizer in the polycarbonate resin preferably is 0.001 to 0.2 parts by weight with respect to 100 parts by weight of the polycarbonate resin.

Examples of the sulfur-based processing heat stabilizer may include pentaerythritol-tetrakis(3-laurylthiopropionate), pentaerythritol-tetrakis(3-myristylthiopropionate), pentaerythritol-tetrakis(3-stearylthiopropionate), dilauryl-3,3'-thiodipropionate, dimyristyl-3,3'-thiodipropionate, and distearyl-3,3'-thiodipropionate. The content of the sulfur-based processing heat stabilizer in the polycarbonate resin is preferably 0.001 to 0.2 parts by weight with respect to 100 parts by weight of the polycarbonate resin.

The mold release agent is preferably an agent whose 90% by weight or more consists of an ester of alcohol and fatty acid. Specific examples of the ester of alcohol and fatty acid may include an ester of monohydric alcohol and fatty acid, and partial esters or complete esters of polyhydric alcohol and fatty acid. The above-described ester of monohydric alcohol and fatty acid is preferably an ester of monohydric alcohol having 1 to 20 carbon atoms and saturated fatty acid having 10 to 30 carbon atoms. On the other hand, the above-described partial esters or complete esters of polyhydric alcohol and fatty acid are preferably partial esters or complete esters of polyhydric alcohol having 1 to 25 carbon atoms and saturated fatty acid having 10 to 30 carbon atoms.

Specific examples of the ester of monohydric alcohol and saturated fatty acid may include stearyl stearate, palmityl palmitate, butyl stearate, methyl laurate, and isopropyl palmitate. Examples of the partial esters or complete esters of polyhydric alcohol and saturated fatty acid may include complete esters or partial esters of dipentaerythritols, such as stearic acid monoglyceride, stearic acid monoglyceride, stearic acid diglyceride, stearic acid triglyceride, monosorbitate stearate, behenic acid monoglyceride, capric acid monoglyceride, lauric acid monoglyceride, pentaerythritol monostearate, pentaerythritol tetrastearate, pentaerythritol tetrapelargonate, propylene glycol monostearate, biphenyl biphenate, sorbitan monostearate, 2-ethylhexyl stearate, and dipentaerythritol hexastearate. The content of such a mold release agent is preferably in the range of 0.005 to 2.0 parts by weight, more preferably in the range of 0.01 to 0.6 parts by weight, and further preferably 0.02 to 0.5 parts by weight, with respect to 100 parts by weight of the polycarbonate resin.

As an ultraviolet absorber, at least one type of ultraviolet absorber selected from the group consisting of a benzotriazole-based ultraviolet absorber, a benzophenone-based ultraviolet absorber, a triazine-based ultraviolet absorber, a cyclic iminoester-based ultraviolet absorber, and a cyanoacrylate-based ultraviolet absorber, is preferable. That is, any one of the following ultraviolet absorbers may be used alone, or the following ultraviolet absorbers may also be used in combination of two or more types.

Examples of the benzotriazole-based ultraviolet absorber may include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidemethyl)-5-methylphenyl]benzotriazole.

Examples of the benzophenone-based ultraviolet absorber may include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxy trihydride benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, and 2-hydroxy-4-methoxy-2'-carboxybenzophenone.

Examples of the triazine-based ultraviolet absorber may include 2-(4,6-diphenyl-1,3,5-triazin-2-yl)-5-[(hexyl)oxy]-phenol, and 2-(4,6-bis(2,4-dimethylphenyl)-1,3,5-triazin-2-yl)-5-[(octyl)oxy]-phenol.

Examples of the cyclic iminoester-based ultraviolet absorber may include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), and 2,2'-(2-chloro-p-phenylene)bis(3,1-benzoxazin-4-one).

Examples of the cyanoacrylate-based ultraviolet absorber may include 1,3-bis-[(2'-cyano-3',3'-diphenylacryloyl)oxy]-2,2-bis[(2-cyano-3,3-diphenylacryloyl)oxy]methyl)propane, and 1,3-bis-[(2-cyano-3,3-diphenylacryloyl)oxy]benzene.

The content of the ultraviolet absorber is preferably 0.01 to 3.0 parts by weight, more preferably 0.02 to 1.0 parts by weight, and further preferably 0.05 to 0.8 parts by weight, with respect to 100 parts by weight of the polycarbonate resin. If the ultraviolet absorber is used within the range of the aforementioned mixed amount, it is possible to provide sufficient weather resistance to the polycarbonate resin, according to the intended use.

The polycarbonate resin of the present invention has a high refractive index and a low Abbe number. Moreover, the polycarbonate resin of the present invention can be advantageously used, not only for optical lenses, but also as an optical molded body suitable for the intended uses of transparent conductive substrates used for liquid crystal displays, organic EL displays, solar cells, etc., or structural materials or functional materials of optical components such as optical disks, liquid crystal panels, optical cards, sheets, films, optical fibers, connectors, evaporated plastic reflectors and displays.

A coating layer, such as an antireflection layer or a hard coating layer, may be established on the surface of the optical molded body, as necessary. The antireflection layer may be either a single layer or a multilayer, or may also be either an organic matter or an inorganic matter. The antireflection layer is preferably an inorganic matter. Specific

examples may include oxides or fluorides, such as silicon oxide, aluminum oxide, zirconium oxide, titanium oxide, cerium oxide, magnesium oxide, or magnesium fluoride.

< Optical lens >

Since the optical lens produced using the polycarbonate resin of the present invention has a high refractive index, a low Abbe number, a small absolute value of birefringence intensity, and a small birefringence in the lens surface, it can be used in the field in which expensive high-refractive-index glass lenses have been conventionally used, such as telescopes, binoculars and TV projectors, and thus, the present optical lens is extremely useful. The present optical lens is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

The optical lens is molded by any given method, such as, for example, an injection molding method, a compression molding method or an injection compression molding method. According to the present invention, a high-refractive-index, low-birefringence aspheric lens, which is a glass lens that is technically difficult to be processed, can be more easily obtained.

In order to avoid the mixing of foreign matters into the optical lens, the molding environment must be naturally a low-dust environment, and the class is preferably 6 or less, and more preferably 5 or less.

< Optical film >

Since the optical film produced using the polycarbonate resin of the present invention is excellent in terms of transparency and heat resistance, it can be preferably used for films for use in liquid crystal substrates, optical memory cards, etc.

In order to avoid the mixing of foreign matters into the optical film, the molding environment must be naturally a low-dust environment, and the class is preferably 6 or less, and more preferably 5 or less.

Examples

Hereinafter, the examples of the present invention will be shown together with comparative examples, and the contents of the invention will be described in detail. However, the present invention is not limited to these examples. Besides, the measured values in the Examples were measured using the following methods or devices.

1) Refractive index (nD)

A polycarbonate resin was molded according to JIS B 7071-2: 2018, to obtain a V block, which was then used as a test piece. The refractive index was measured at 23°C using a refractometer (KPR-3000, manufactured by Shimadzu Corporation).

2) Abbe number (ν)

The same test piece (V block) as that used in the measurement of a refractive index was used, and the refractive indexes at wavelengths of 486 nm, 589 nm, and 656 nm were measured at 23°C using a refractometer. Thereafter, the Abbe number was calculated according to the following equation:

$$\nu = (nD-1)/(nF-nC),$$

wherein

nD: refractive index at a wavelength of 589 nm,
nC: refractive index at a wavelength of 656 nm, and
nF: refractive index at a wavelength of 486 nm.

3) Birefringence intensity

- Molding of test piece

The obtained resin was subjected to extrusion molding, so as to obtain a film test piece with a thickness of 100 μn.

Molding machine: PULAENG-EXTRUDER
Molding conditions:
Cylinder temperature: 260°C; roll temperature: Tg +10°C

- Measurement of birefringence

The aforementioned film test piece was stretched, and the birefringence at 450 nm was measured.

Measurement apparatus: JASCO Spectroellipsometer M-220
Measurement conditions: The birefringence was measured using a 1.5-fold stretched film.

The birefringence intensity is the ratio between the birefringence of the obtained resin at 450 nm and the birefringence of BPEF-derived polycarbonate (homo body) at 450 nm.

4) Glass transition temperature (Tg)

The glass transition temperature (Tg) was measured according to JIS K7121-1987, using a differential scanning calorimeter by a temperature-increasing program of 10°C/min.
Differential scanning calorimeter: X-DSC7000, manufactured by Hitachi High-Tech Science Corporation

5) Weight average molecular weight

The weight average molecular weight of the obtained resin was measured by applying gel permeation chromatography (GPC) and then calculating the weight average molecular weight in terms of standard polystyrene. The used apparatus, columns and measurement conditions are as follows.

- GPC apparatus: HLC-8420GPC, manufactured by Tosoh Corporation
- Columns: TSKgel SuperHM-M x 3, manufactured by Tosoh Corporation

  TSKgel guard column SuperH-H x 1, manufactured by Tosoh Corporation
  TSKgel SuperH-RC x 1, manufactured by Tosoh Corporation

- Detector: RI Detector
- Standard polystyrene: Standard Polystyrene Kit PStQuick C, manufactured by Tosoh Corporation
- Sample solution: 0.2 mass % Tetrahydrofuran solution
- Eluent: Tetrahydrofuran
- Eluent flow rate: 0.6 mL/min
- Column temperature: 40°C

6) Melt volume-flow rate (MVR)

The obtained resin was vacuum-dried at 120°C for 4 hours, and thereafter, the melt volume-flow rate (MVR) was measured according to JIS K7210.

Measurement apparatus: Melt Indexer T-111, manufactured by TOYO SEIKI SEISAKU-SHO, LTD.
Measurement conditions: MVR was measured at a temperature of 260°C under a load of 2160 g.
Operations: MVR (unit: $cm^3$/10 min) was calculated from the amount of a resin extruded per 10 minutes from the standard die installed at the bottom of the cylinder.

7) Birefringence in lens surface

- Molding of test piece

The obtained resin was subjected to injection molding, so as to obtain a concave lens test piece with a diameter of 4.5 mm and a center thickness of 0.2mm.

Molding machine: SUMITOMO SHI DEMAG SE50EV
Molding conditions:
Cylinder temperature: 280°C; mold temperature: Tg -15°C; injection rate: 40 mm/s; VP pressure: 70 MPa (position: 2.3 mm); and holding pressure: 65 MPax1s + 55 MPa x 1.5s

- Measurement of birefringence in lens surface

Retardation of the thus obtained concave lens test piece was measured.
Measurement apparatus: WPA-100, manufactured by Photonic Lattice, Inc.
Data processing method: Using the software "PA/WPA View" manufactured by Photonic Lattice, Inc., the value of the birefringence in the lens surface was obtained from the mean value of retardation.

8) Haze

The obtained resin was molded to a thickness of 3 mm, and the haze was measured according to JIS K-7136. Measurement apparatus: Hazemeter SH7000, manufactured by NIPPON DENSHOKU INDUSTRIES Co., Ltd.

(Example 1A)

Raw materials, namely, 9391.9 g (15.9 mol) of 9,9-bis[4-(2-hydroxyethoxy)3-phenylphenyl]fluorene (hereinafter abbreviated as "OPPFL" at times) represented by the structural formula as shown below, 1457.7 g (2.7 mol) of 9,9-bis[6-(2-hydroxyethoxy)-2-naphthyl]fluorene (hereinafter abbreviated as "NOLE" at times) represented by the structural formula as shown below, 5700.0 g (15.2 mol) of 2,2'-bis(2-hydroxyethoxy)-1,1'-binaphthyl (hereinafter abbreviated as "BNE" at times) represented by the structural formula as shown below, 7450 g (34.8 mol) of diphenyl carbonate (hereinafter abbreviated as "DPC" at times, and 12 mL of a 2.5 x $10^{-2}$ mol/L sodium hydrogen carbonate aqueous solution (3.0 x $10^{-4}$ mol, namely, 10 x $10^{-6}$ mol with respect to a total of 1 mol of dihydroxy compound) were placed in a 50-L reactor equipped with a stirrer and a distillation apparatus, followed by nitrogen substitution, and thereafter, the mixture was heated to 200°C under a nitrogen atmosphere of 700 Torr over 1 hour. Twenty minutes after initiation of the heating, it was confirmed that the raw materials were completely dissolved, and the obtained solution was then stirred for 80 minutes under the same conditions as those described above. Thereafter, the degree of pressure reduction was adjusted to 200 Torr over 20 minutes, and the reaction mixture was then retained under conditions of 200°C and 200 Torr for 10 minutes, so that a transesterification reaction was carried out. After that, the temperature was further increased to 215°C and the pressure was reduced to 180 Torr over 30 minutes. Thereafter, the conditions of the reaction mixture were adjusted to 230°C and 150 Torr over 40 minutes. Subsequently, the degree of pressure reduction was adjusted to 120 Torr over 10 minutes. Further, the conditions of the reaction mixture were adjusted to 100 Torr, 240°C over 10 minutes. After that, the degree of pressure reduction was adjusted to 1 Torr over 50 minutes, and polymerization was then carried out at 240°C at 1 Torr for 30 minutes. After completion of the reaction, nitrogen was introduced into the reaction system in the reactor, followed by pressurization. The generated polycarbonate resin was extracted, while pelletizing, so as to obtain a polycarbonate resin. The physical properties of the obtained resin are shown in Table 2.

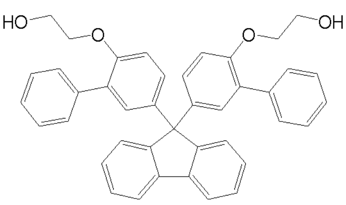

OPPFL

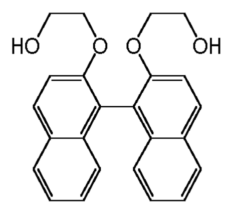

BNE

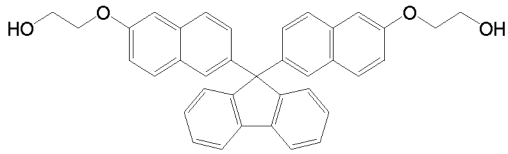

NOLE

(Examples 2A to 4A and Comparative Examples 1A to 8A)

A polycarbonate resin was obtained in the same manner as that of Example 1A, with the exception that the raw materials shown in Table 1 were used.

The physical properties of the obtained resin are shown in Table 2.

[Table 1]

| | Constituent unit (A) | Constituent unit (B) | | Constituen t unit (C) | Raw materials (dial monomers) | | | | | | | | Raw materials other than diol monomers | | |
|---|---|---|---|---|---|---|---|---|---|---|---|---|---|---|---|
| | | | | | Constituent unit (A) | | Constituent unit (B) | | | | Constituent unit (C) | | | | |
| | OPPFL | BNE | DPBHBN A | NOLE | OPPFL | | BNE | | DPBHBNA | | NOLE | | DPC | | Cataysc aqueous solution |
| | (mol%) | (mol%) | (mol%) | (mol%) | (g) | (mol) | (g) | (mol) | (g) | (mol) | (g) | (mol) | (9) | (mol) | (ml) |
| Ex. 1A | 47 | 45 | - | 8 | 7414.2 | 12.6 | 4499.8 | 12.0 | 0.0 | 0.0 | 1150.7 | 2.1 | 5863.8 | 27.4 | 3 |
| Ex. 2A | 40 | 35 | 20 | 5 | 6310.3 | 10.7 | 3500.0 | 9.3 | 2812.9 | 5.3 | 719.3 | 1.3 | 5892.7 | 27.5 | 2 |
| Ex. 3A | 36 | 10 | 54 | - | 5384.1 | 9.1 | 948.0 | 2.5 | 7200.0 | 13.7 | 0.0 | 0.0 | 5613.5 | 26.2 | 2 |
| Ex. 4A | 24 | - | 70 | 6 | 3653.5 | 6.2 | 0.0 | 0.0 | 9500.0 | 18.0 | 832.9 | 1.5 | 5708.2 | 26.6 | 2 |
| Comp.Ex. 1A | - | 45 | 15 | 40 | 0.0 | 0.0 | 4658.7 | 12.4 | 2184.1 | 4.1 | 5900.0 | 11.1 | 6081.0 | 28.4 | 2 |
| Comp.Ex. 2A | 20 | 20 | 60 | - | 3260.6 | 5.5 | 2070.0 | 5.5 | 8742.9 | 16.6 | 0.0 | 0.0 | 6149.0 | 28.7 | 2 |
| Comp.Ex. 3A | 75 | - | 25 | - | 12227.2 | 20.7 | 0.0 | 0.0 | 3642.9 | 6.9 | 0.0 | 0.0 | 6060.3 | 28.3 | 2 |
| Comp.Ex. 4A | 50 | - | 50 | - | 8151.5 | 13.8 | 0.0 | 0.0 | 7285.7 | 13.8 | 0.0 | 0.0 | 6072.1 | 28.3 | 2 |
| Comp.Ex. 5A | 17 | 50 | - | 33 | 2950.1 | 5.0 | 5500.0 | 14.7 | 0.0 | 0.0 | 5221.8 | 9.7 | 6469.4 | 30.2 | 2 |
| Comp.Ex. 6A | 27 | 42 | - | 31 | 4563.7 | 7.7 | 4500.0 | 12.0 | 0.0 | 0.0 | 4777.9 | 8.9 | 6301.4 | 29.4 | 2 |
| Comp.Ex. 7A | 21 | 52 | - | 27 | 2867.0 | 4.9 | 4500.0 | 12.0 | 0.0 | 0.0 | 3361.2 | 6.2 | 5089.6 | 23.8 | 2 |
| Comp.Ex. 8A | 50 | - | - | 50 | 7000.0 | 13.0 | 0.0 | 0.0 | 0.0 | 0.0 | 7676.7 | 13.0 | 5723.8 | 26.7 | 2 |

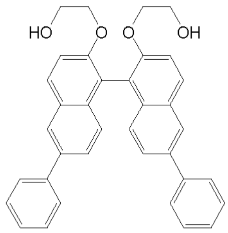

DPBHBNA

[Table 2]

| | Constituent unit (A) | Constituent unit (B) | | Constituent unit (C) | Physical properties | | | | | | | |
|---|---|---|---|---|---|---|---|---|---|---|---|---|
| | OPPFL | BNE | DPBHBNA | NOLE | nD | vd | Tg | Birefringence intensity | Mw | MVR | Birefringence in lens surface | Haze |
| | (mol%) | (mol%) | (mol%) | (mol%) | - | - | (°C) | - | | | - | - |
| Ex. 1A | 47 | 45 | - | 8 | 1.664 | 199 | 144 | 0.1 | 45,000 | 30 | 5 | 0.15 |
| Ex. 2A | 40 | 35 | 20 | 5 | 1.671 | 18.9 | 145 | 0.0 | 47,000 | 45 | 3 | 0.15 |
| Ex. 3A | 36 | 10 | 54 | - | 1.680 | 17.6 | 153 | -0.3 | 41,000 | 45 | 6 | 0.15 |
| Ex. 4A | 24 | - | 70 | 6 | 1.687 | 169 | 158 | 0.5 | 33,000 | 55 | 10 | 0.20 |
| Comp.Ex 1A | - | 45 | 15 | 40 | 1.680 | 18.1 | 147 | 40 | 33,000 | 37 | 53 | 0.19 |
| Comp.Ex 2A | 20 | 20 | 60 | - | 1.683 | 170 | 152 | 0.1 | 28,000 | 60 | Stable molding inpossible* | - |
| Comp.Ex 3A | 75 | - | 25 | - | 1.665 | 200 | 157 | -1.3 | 59,000 | 20 | 25 | 0.23 |
| Comp.Ex 4A | 50 | - | 50 | - | 1.675 | 18.4 | 159 | -0.7 | 51,000 | 30 | 20 | 0.20 |
| Comp.Ex 5A | 17 | 50 | - | 33 | 1.670 | 19.0 | 145 | 3.0 | 34,000 | 25 | 50 | 0.20 |
| Comp.Ex 6A | 27 | 42 | - | 31 | 1.670 | 19.0 | 142 | 2.6 | 32,000 | 29 | 47 | 0.19 |
| Comp.Ex 7A | 21 | 52 | - | 27 | 1.670 | 19.0 | 140 | 2.4 | 32,000 | 28 | 51 | 0.20 |
| Comp.Ex 8A | 50 | - | - | 50 | 1.670 | 19.8 | 171 | 3.54 | 41,800 | 5 | Stable molding inpossible* | - |

* Molding is possible with 3 mint, but intensity is insufficient for molding thin lenses.

(Example 1B)

Raw materials, namely, 1690 g (3.14 mol) of 9,9-bis(6-(2-hydroxyethoxy)naphthalen-2-yl)fluorene (BNEF), 6170 g (16.5 mol) of 2,2'-bis(2-hydroxyethoxy)-1,1'-binaphthalene (BNE), 4760 g (10.9 mol) of 9,9-bis(4-(2-hydroxyethoxy)phenyl)fluorene (BPEF), 8390 g (14.2 mol) of 9,9-bis(4-(2-hydroxyethoxy)-3-phenylphenyl)fluorene (BPPEF), 10000 g (46.7 mol) of diphenyl carbonate (DPC), and 16 ml of a 2.5 x $10^{-2}$ mol/L sodium hydrogen carbonate aqueous solution (4.0 x $10^{-4}$ mol, namely, 8.9 x $10^{-6}$ mol with respect to a total of 1 mol of dihydroxy compound) were placed in a 50-L reactor equipped with a stirrer and a distillation apparatus, and thereafter, the mixture was heated to 180°C under a nitrogen atmosphere of 760 mmHg. Thirty minutes after initiation of the heating, it was confirmed that the raw materials were completely dissolved, and the obtained solution was then stirred for 120 minutes under the same conditions as those described above. Thereafter, the degree of pressure reduction was adjusted to 20 mmHg, and at the same time, the temperature was increased to 200°C at a rate of 60°C/hr. At this time, initiation of distillation of by-produced phenol was confirmed. Thereafter, while the temperature was retained at 200°C for 20 minutes, the reaction was carried out. Thereafter, the temperature was further increased to 230°C at a rate of 75°C/hr. Ten minutes after completion of the temperature increasing, while the temperature was retained as was, the degree of pressure reduction was set to be 1 mmHg or less over 2 hours. Thereafter, the temperature was increased to 245°C at a rate of 60°C/hr, and the reaction mixture was further stirred for 30 minutes. After completion of the reaction, nitrogen was introduced into the reaction system in the reactor, followed by pressurization. The generated polycarbonate resin was extracted, while pelletizing, so as to obtain a polycarbonate resin. The physical property values of the obtained resin are shown in Table 3.

[Table 3]

| | Composition ratio | | | | Physical properties | | | | | | | |
|---|---|---|---|---|---|---|---|---|---|---|---|---|
| | Formula (1) BNEF | Formula (2) BHEBN (BNE) | Formula (3) BPEF | Formula (3) BPPEF | Mw | Tg | Refractive index (nD) | Abbe number (v) | MVR | Birefringence intensity | Birefringence in lens surface | Haze |
| | mol% | mol% | mol% | mol% | - | °C | - | - | - | - | - | - |
| Ex. 1B | 702 | 36.89 | 24.30 | 31.80 | 35,500 | 139 | 1.657 | 21 | 35 | 0.0 | 4 | 0.20 |
| Ex. 2B | 30 | 52.60 | 26.53 | 1787 | 35,000 | 135 | 1.657 | 21 | 40 | 0.0 | 4 | 0.15 |
| Comp.Ex. 1B | 15 | 45 | 0 | 40 | 39,000 | 142 | 1.664 | 20 | 20 | 0.9 | 30 | 0.20 |
| Comp.Ex. 2B | 15 | 36.89 | 20.30 | 27.81 | 36,000 | 146 | 1.661 | 20 | 25 | 0.8 | 25 | 0.19 |
| Comp.Ex. 3B | 0 | 36.89 | 27.80 | 35.32 | 35,000 | 140 | 1.655 | 21 | 35 | -0.7 | 20 | 0.19 |

(Example 2B and Comparative Examples 1B to 3B)

A polycarbonate resin was obtained in the same manner as that of Example 1B, with the exception that the raw materials shown in Table 4 were used.

The physical properties of the obtained resin are shown in Table 3.

[Table 4]

| | Formula (1) BNEF | Formula (2) BHEBN (BNE) | Formula (3) BPEF | Formula (3) BPPEF | DPC | Catalyst | Formula (1) BNEF | Formula (2) BHEBN (BNE) | Formula (3) BPEF | Formula (3) BPPEF | DPC |
|---|---|---|---|---|---|---|---|---|---|---|---|
| | g | g | g | g | g | ml | mol | mol | mol | mol | mol |
| Ex. 1B | 1690 | 6170 | 4760 | 8390 | 10000 | 16 | 3.14 | 16.50 | 10.90 | 14.20 | 46.70 |
| Ex. 2B | 721 | 8800 | 5200 | 4720 | 10000 | 16 | 1.34 | 23.50 | 11.90 | 7.98 | 46.70 |
| Comp.Ex. 1B | 3610 | 7530 | 0 | 10600 | 10000 | 16 | 6.70 | 20.10 | 0 | 17.90 | 46.70 |
| Comp.Ex. 2B | 3610 | 6170 | 3980 | 7340 | 10000 | 16 | 6.70 | 16.50 | 9.07 | 12.40 | 46.70 |
| Comp.Ex. 3B | 0 | 6170 | 5450 | 9320 | 10000 | 16 | 0 | 16.50 | 12.40 | 15.80 | 46.70 |

## Claims

1. A thermoplastic resin, comprising 22% to 49% by mole of a constituent unit (A) derived from a diol represented by the following general formula (1A), 40% to 75% by mole of a constituent unit (B) derived from a diol represented by the following general formula (2A), and 0% to 15% by mole of a constituent unit (C) derived from a diol represented by the following general formula (3A), with respect to the total amount (100% by mole) of the constituent units in the resin:

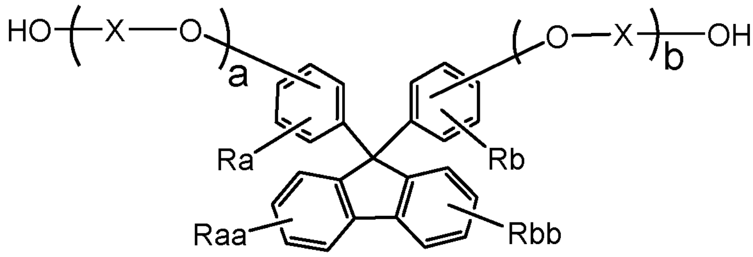

(1A)

wherein

$R_a$, $R_b$, $R_{aa}$ and $R_{bb}$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C{\equiv}C-R_h$, wherein
$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,
X each independently represents an alkylene group containing 1 to 5 carbon atoms and optionally having a substituent, and
a and b each independently represent an integer of 0 to 10,

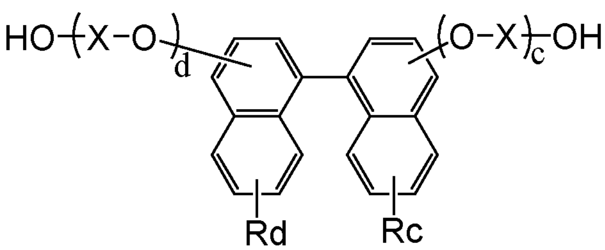

(2A)

wherein

$R_c$ and $R_d$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 30 carbon atoms and optionally having a substituent, a heteroaryl group containing 6 to 30 carbon atoms and optionally having a substituent, which comprises one or more heterocyclic atoms selected from O, N and S, an aryloxy group containing 6 to 20 carbon atoms and optionally having a substituent, and $-C{\equiv}C-R_h$, wherein
$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X each independently represents an alkylene group containing 1 to 5 carbon atoms and optionally having a substituent, and

c and d each independently represent an integer of 0 to 10, and

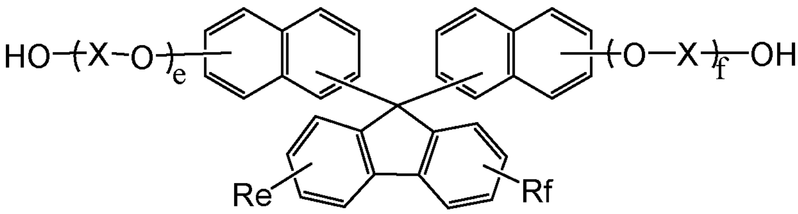

(3A)

wherein

$R_e$ and $R_f$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C \equiv C-R_h$, wherein $R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X each independently represents an alkylene group containing 1 to 5 carbon atoms and optionally having a substituent, and

e and f each independently represent an integer of 0 to 10.

**2.** The thermoplastic resin according to claim 1, wherein the ratio of the constituent unit (A) derived from the diol represented by the general formula (1A) is 24% to 47% by mole, the ratio of the constituent unit (B) derived from the diol represented by the general formula (2A) is 45% to 70% by mole, and the ratio of the constituent unit (C) derived from the diol represented by the general formula (3A) is 0% to 8% by mole, with respect to the total amount (100% by mole) of the constituent units in the resin.

**3.** The thermoplastic resin according to claim 1 or 2, wherein the diol represented by the general formula (1A) comprises a diol represented by the following structural formula:

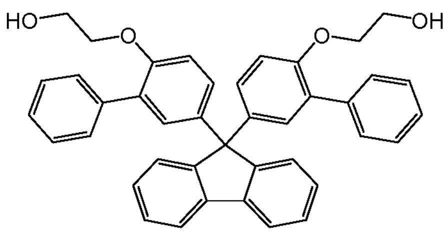

(OPPFL)

**4.** The thermoplastic resin according to any one of claims 1 to 3, wherein the diol represented by the general formula (2A) comprises at least one of diols represented by the following structural formulae:

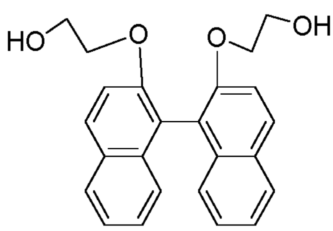

(BNE)

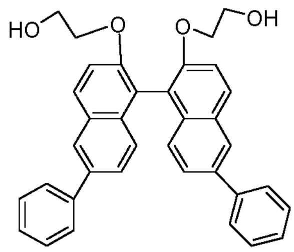

(DPBHBNA)

**5.** The thermoplastic resin according to any one of claims 1 to 4, wherein the diol represented by the general formula (3A) comprises a diol represented by the following structural formula:

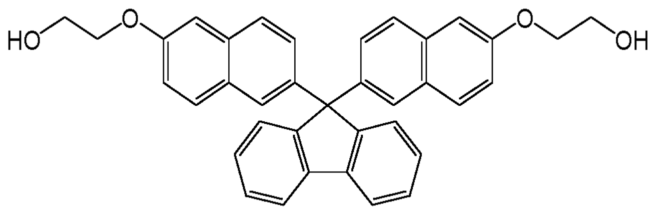

(NOLE)

**6.** The thermoplastic resin according to any one of claims 1 to 5, which is a polycarbonate resin.

**7.** The thermoplastic resin according to any one of claims 1 to 6, which further comprises a constituent unit derived from at least one monomer selected from the following monomer group:

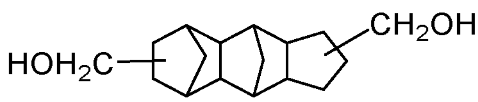

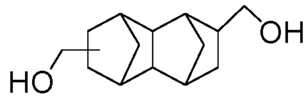

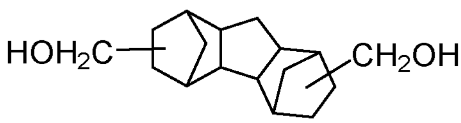

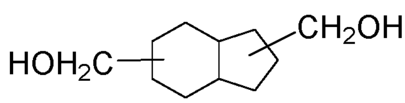

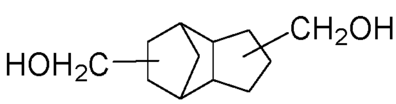

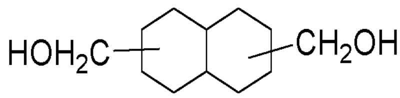

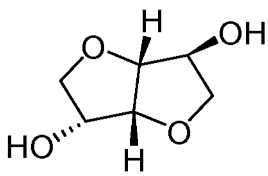

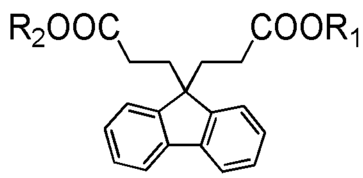

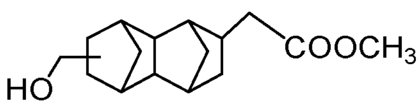

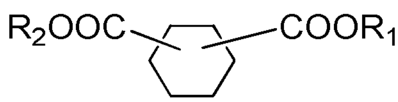

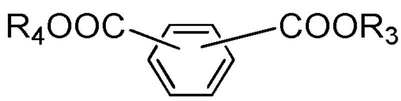

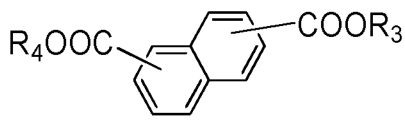

wherein $R_1$ and $R_2$ each independently represent a hydrogen atom, a methyl group or an ethyl group, and $R_3$ and $R_4$ each independently represent a hydrogen atom, a methyl group, an ethyl group or alkylene glycol containing 2 to 5 carbon atoms.

**8.** The thermoplastic resin according to any one of claims 1 to 7, which has a birefringence in the lens surface of 1 to 21.

**9.** The thermoplastic resin according to any one of claims 1 to 8, which has a polystyrene-converted weight average molecular weight (Mw) of 10,000 to 100,000.

**10.** The thermoplastic resin according to any one of claims 1 to 9, which has a refractive index (nD) of 1.650 to 1.695.

**11.** The thermoplastic resin according to any one of claims 1 to 10, which has an Abbe number (v) of 16.0 to 21.0.

**12.** The thermoplastic resin according to any one of claims 1 to 11, which has a glass transition temperature of 130°C to 190°C.

**13.** The thermoplastic resin according to any one of claims 1 to 12, which has a melt volume-flow rate (MVR) of 20 to 55.

**14.** The thermoplastic resin according to any one of claims 1 to 13, which has a haze of 0.01 to 1.00.

**15.** An optical member, comprising the thermoplastic resin according to any one of claims 1 to 14.

**16.** An optical lens, comprising the thermoplastic resin according to any one of claims 1 to 14.

**17.** An optical film, comprising the thermoplastic resin according to any one of claims 1 to 14.

**18.** A polycarbonate resin, comprising a constituent unit represented by the following general formula (1B), a constituent unit represented by the following general formula (2B), and a constituent unit represented by the following general formula (3B), wherein

the ratio of the constituent unit represented by the following general formula (1B) is 1% by mole or more and less than 10% by mole,
the ratio of the constituent unit represented by the following general formula (2B) is 10% to 60% by mole, and the ratio of the constituent unit represented by the following general formula (3B) is 5% to 80% by mole:

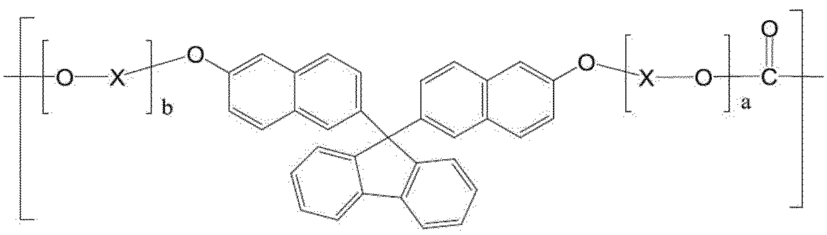

(1B)

wherein X represents an alkylene group containing 1 to 4 carbon atoms, and a and b each independently represent an integer of 1 to 10,

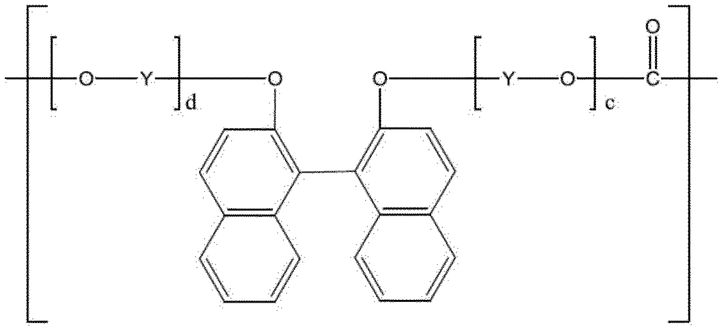

(2B)

wherein Y represents an alkylene group containing 1 to 4 carbon atoms, and c and d each independently represent an integer of 1 to 10, and

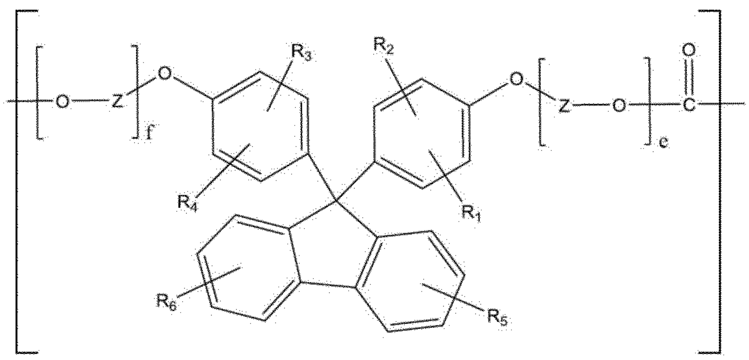

(3B)

wherein

Z represents an alkylene group containing 1 to 4 carbon atoms,
$R_1$ to $R_6$ each independently represent a hydrogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and
e and f each independently represent an integer of 0 to 5.

**19.** The polycarbonate resin according to claim 18, wherein

the ratio of the constituent unit represented by the general formula (1B) is 2% to 9% by mole,
the ratio of the constituent unit represented by the general formula (2B) is 20% to 60% by mole, and
the ratio of the constituent unit represented by the general formula (3B) is 30% to 70% by mole.

**20.** An optical lens, comprising the polycarbonate resin according to claim 18 or 19.

**INTERNATIONAL SEARCH REPORT**

International application No.
**PCT/JP2022/041824**

**A. CLASSIFICATION OF SUBJECT MATTER**

***C08G 64/04***(2006.01)i; ***C08G 63/00***(2006.01)i; ***C08G 64/02***(2006.01)i; ***G02B 1/04***(2006.01)i
FI: C08G64/04; C08G63/00; C08G64/02; G02B1/04

According to International Patent Classification (IPC) or to both national classification and IPC

**B. FIELDS SEARCHED**

Minimum documentation searched (classification system followed by classification symbols)

C08G64/02; C08G64/04; C08G63/00; G02B1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/014962 A1 (TEIJIN LTD) 28 January 2021 (2021-01-28) claims, paragraphs [0041], [0060], examples, comparative examples, paragraph [0231] | 1-20 |
| X | WO 2020/080199 A1 (MITSUBISHI GAS CHEMICAL CO) 23 April 2020 (2020-04-23) claims, paragraph [0012], examples, comparative examples | 1-20 |
| X | WO 2019/146507 A1 (MITSUBISHI GAS CHEMICAL CO) 01 August 2019 (2019-08-01) claims, paragraphs [0012], [0019], production examples, examples, table 1 | 1-20 |
| X | WO 2019/044875 A1 (MITSUBISHI GAS CHEMICAL CO) 07 March 2019 (2019-03-07) claims, paragraph [0013], examples, comparative examples | 1-20 |
| X | WO 2018/016516 A1 (MITSUBISHI GAS CHEMICAL CO) 25 January 2018 (2018-01-25) claims, paragraph [0012], examples, comparative examples | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/041824**

| Patent document cited in search report | Publication date (day/month/year) | Patent family member(s) | Publication date (day/month/year) |
|---|---|---|---|
| WO 2021/014962 A1 | 28 January 2021 | CN 114375313 A<br>TW 202122455 A | |
| WO 2020/080199 A1 | 23 April 2020 | US 2021/0347937 A1<br>claims, paragraph [0013], examples, comparative examples<br>EP 3868811 A1<br>CN 112823178 A<br>KR 10-2021-0073510 A<br>TW 202022016 A | |
| WO 2019/146507 A1 | 01 August 2019 | US 2021/0363295 A1<br>claims, paragraphs [0017], [0027], examples, manufacturing examples, table 1<br>EP 3744791 A1<br>KR 10-2020-0105864 A<br>CN 111630109 A<br>TW 201940549 A | |
| WO 2019/044875 A1 | 07 March 2019 | US 2020/0181325 A1<br>claims, paragraph [0012], examples, comparative examples<br>EP 3677615 A1<br>KR 10-2020-0041975 A<br>CN 111094389 A<br>CN 114716658 A<br>CN 114752053 A<br>TW 201920353 A | |
| WO 2018/016516 A1 | 25 January 2018 | JP 2022-37011 A<br>US 2019/0241703 A1<br>claims, paragraph [0011], examples, comparative examples<br>EP 3489279 A1<br>CN 109476835 A<br>KR 10-2019-0032345 A<br>TW 201815883 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018002893 A
- JP 2018002894 A
- JP 2018002895 A
- WO 2017078073 A
- WO 2014073496 A
- WO 2007142149 A
- JP 6025398 A
- JP 5442800 B